Europäisches Patentamt

European Patent Office

Office européen des brevets

(19)

(11) **EP 0 328 165 B1**

(12) **EUROPEAN PATENT SPECIFICATION**

(45) Date of publication and mention
of the grant of the patent:
**29.10.1997 Bulletin 1997/44**

(51) Int Cl.6: **G03B 42/02**, G01T 1/29,
G06T 5/00

(21) Application number: 89106513.8

(22) Date of filing: **31.07.1985**

(54) **Method of detecting an exposure field of an image in an image read-out process**

Verfahren zur Detektion einer Bildbelichtungsfläche in einem Bildauslesevorgang

Méthode de détection d'un plan d'exposition d'une image dans un procédé de lecture d'image

(84) Designated Contracting States:
**DE FR GB NL**

(30) Priority: **31.07.1984 JP 160355/84**
**15.07.1985 JP 155843/85**
**15.07.1985 JP 155844/85**
**15.07.1985 JP 155845/85**
**15.07.1985 JP 155846/85**
**15.07.1985 JP 155847/85**
**15.07.1985 JP 155848/85**

(43) Date of publication of application:
**16.08.1989 Bulletin 1989/33**

(62) Document number(s) of the earlier application(s) in
accordance with Art. 76 EPC:
**85109602.4 / 0 170 270**

(73) Proprietor: **FUJI PHOTO FILM CO., LTD.**
**Kanagawa 250-01 (JP)**

(72) Inventors:
• **Adachi, Yuuma Fuji Photo Film Co., Ltd.**
**Ashigarakami-gun Kanagawa-ken (JP)**
• **Nakajima, Nobuyoshi Fuji Photo Film Co., Ltd.**
**Ashigarakami-gun Kanagawa-ken (JP)**
• **Ishida, Masamitsu Fuji Photo Film Co., Ltd.**
**Ashigarakami-gun Kanagawa-ken (JP)**

(74) Representative: **Grünecker, Kinkeldey,**
**Stockmair & Schwanhäusser Anwaltssozietät**
**Maximilianstrasse 58**
**80538 München (DE)**

(56) References cited:
**US-A- 4 346 406**

## Description

This invention relates to a method of detecting an exposure field in an image read-out process. The invention may be applied in a radiation image recording and reproducing systems using stimulable phosphor sheets as image carriers. However, the invention may also be applied in a system in which an image is photoelectrically read out.

In a known radiation image recording and reproducing system using a stimulable phosphor as disclosed in U.S. Patent US-A-4,258,264 a sheet provided with a layer of stimulable phosphor is first exposed to a radiation passing through an object to have a radiation image stored therein, and is then scanned with stimulating rays such as a laser beam which cause it to emit light in the pattern of the stored image. The light emitted by the stimulable phosphor sheet upon stimulation thereof is photoelectrically detected and converted to an electric image signal, which is processed as desired to reproduce a visible image on a recording medium such as a photographic light-sensitive material or on a display device such as a cathode ray tube (CRT). In a case where the radiation image recording and reproducing system is used for medical diagnosis, portions of the human body not related to diagnosis should not be exposed to radiation, since the radiation is harmful to the human body. Further, when the human body portions not related to diagnosis are exposed to radiation, the radiation is scattered by such portions to the portion related to the diagnosis and the contrast and resolution are adversely affected by the scattered radiation. Therefore, in many cases, the radiation exposure field should be limited when a radiation image is recorded. Normally, when the radiation exposure field is limited, radiation scattered by the object within the radiation exposure field passes outside of the radiation exposure field. The scattered radiation is absorbed and stored, example given, in a stimulable phosphor sheet which exhibits high sensitivity and, therefore, the histogram of the light emission amount includes light emission amount caused by scattered radiation. Since the light emission amount caused by scattered radiation outside of the radiation exposure field is often larger than the light emission amount within the radiation exposure field, it is not always possible to discriminate between the light emission amount inside and outside of the radiation exposure field.

Therefore, if a histogram is taken (cf eg US-A-4 346 406) in which the maximum and minimum signal values are calculated and image reproduced is then adjusted on the basis of Smax and Smin, the minimum light emission amount within the radiation exposure field may not be detected as Smin and that caused by the scattered radiation outside of the radiation exposure field may be detected as Smin. This, of course, would lead to difficulties in accurate diagnosis.

The object of the invention is to suggest a method for accurately detecting an exposure field of an image in an image read out process.

A method which solves this task is disclosed in claim 1. Preferred embodiments are disclosed in the depending claims.

The method is in the following described in a specific application in which a preliminary read-out and a final read-out of a phosphor sheet are conducted and the detection of the exposure field is effected on the basis of information gathered in the preliminary read-out.

In order to detect digital image signals at the respective positions on the stimulable phosphor sheet on the basis of the image information, it is necessary to define the positions on the sheet. The positions may be defined in the unit of picture element, or a plurality of picture elements in predetermined relation, for example, three to five picture elements adjacent to each other in a predetermined direction, may be defined as one position. In the former case, the digital image signals at respective positions mean the signals obtained by digitizing the image information at the picture elements corresponding to the respective positions. In the latter case, the digital image signals at respective positions mean those detected on the basis of the image information at a plurality of the picture elements included in the respective positions, for example, those obtained by averaging the image information at a plurality of the picture elements. In the latter case, the information values at the positions are defined by conducting a pre-processing (linear or non-linear filtering) of the image information obtained at respective picture elements by the preliminary read-out, for example, by conducting one-dimensional smoothing of the image information at respective picture elements at intervals of three to five lines. The manner in which the positions are defined, i.e. the type of the pre-processing, may be selected on the basis of the shape of the radiation exposure field on the stimulable phosphor sheet, or the like. The shape of the radiation exposure field (e.g., circular or rectangular) is known in advance when the radiation exposure field is limited. When the radiation exposure field is rectangular, x and y axes may be selected along two adjacent sides of the rectangle, and sets of several lines in the x and y axis directions may be one-dimensionally smoothed.

After the digital signal values of the image at respective positions are obtained, they are subjected to a differentiation processing, which may be one-dimensional differentiation of first or higher order, and may be two-dimensional differentiation of first or higher order. For a discretely sampled image, differentiation is equivalent to calculation of differences between image signal values present in the vicinity. The image signal values subjected to difference calculation may be selected on the basis of the shape of the radiation exposure field which is known in advance. The term "presence in the vicinity" embraces not only the case where the image signal values are present adjacent to each other but also the case where they are present alternately. For example, when the radiation exposure field is rectangular, x and y axes may be selected as described above, and differences between image signal values at positions adjacent to each other along the x and y axis directions may be calculated.

After differentiated values are obtained by the differentiation processing of the image signal, the radiation exposure field on the stimulable phosphor sheet is detected by use of the differentiated values. Since the image signal values are proportional to the level of radiation energy incident on the stimulable phosphor sheet, image signal values taken from the outside of the radiation exposure field generally have low quantum levels, and those within the radiation exposure field generally have high quantum levels. Therefore, differences between image signal values at a portion where the contour of the radiation exposure field is positioned generally have quantum levels higher than those of differences between image signal values at the other portions, and the radiation exposure field can be detected by use of the differences. For example, when the differences are added along the contour of an assumed radiation exposure field, e.g. along the aforesaid x and y axes in the case where the radiation exposure field is rectangular, the sum of the differences at the contour becomes far larger than that at the other portions, and it becomes possible to detect the position of the radiation exposure field.

The radiation exposure field is detected as described above, and then read-out conditions in final read-out are adjusted on the basis of the image information obtained within the radiation exposure field by the preliminary read-out. The read-out conditions may be adjusted in various manners, for example, by creating a histogram of the light emission amounts within the radiation exposure field, calculating maximum light emission amount Smax and minimum light emission amount Smin, and adjusting the read-out conditions on the basis of Smax and Smin.

The read-out conditions may be adjusted on the basis of the preliminary read-out image information within the radiation exposure field and by considering the image recording portion of the object such as the head, the chest or the abdomen and the image recording method such as plain image recording, contrasted image recording, tomography or enlarged image recording.

After the radiation exposure field is detected and the read-out conditions for the final read-out are adjusted on the basis of the image information within the radiation exposure field, the final read-out is conducted by use of the read-out conditions. As described in Japanese Unexamined Patent Publication No. JP-A-60120346 (1985), the final read-out region should preferably be limited within the radiation exposure field. When the final read-out region is limited within the radiation exposure field, noise components caused by scattered radiation and stored outside of the radiation exposure field on the stimulable phosphor sheet are not read out, and it is possible to obtain a reproduced visible image having a high image quality. Also, since the read-out region is limited, it becomes possible to shorten the read-out time or to increase the read-out density.

In the method defined in claim 1 of the present invention, since adverse effects of scattered radiation incident outside of the radiation exposure field on the stimulable phosphor sheet are eliminated when the radiation exposure field is limited in image recording and the read-out conditions are adjusted on the basis of the effective image information within the radiation exposure field on the sheet, it is always possible to adjust the read-out conditions to appropriate values.

Particularly, in the method of the present invention, since the radiation exposure field is directly detected on the basis of differentiated values obtained by the differentiation processing of the preliminary read-out image signal values, i.e. on the basis of the image information stored in the stimulable phosphor sheet, it is possible to detect the radiation exposure field accurately, and therefore to adjust the read-out conditions accurately to appropriate values.

Also, when the differentiation processing is conducted after pre-processing the preliminary read-out image information at respective picture elements as described above, it is possible to eliminate the adverse effects of noise included in the image information by the pre-processing and to decrease the image signals subjected to the differentiation processing and the like. Therefore it becomes possible to detect the radiation exposure field more accurately and quickly.

BRIEF DESCRIPTION OF THE DRAWINGS

Figure 1 is a schematic view showing the relationship between the stimulable phosphor sheet and the radiation exposure field in an embodiment of the method of adjusting radiation image read-out conditions in accordance with the present invention,

Figure 2A is a schematic view showing the image information at respective picture elements,

Figure 2B is a schematic view showing the digital image signal values at respective positions obtained from the image information at respective picture elements,

Figure 2C is a schematic view showing the differences between image signals in the vicinity which are calculated by the differentiation processing of the image signals at respective positions,

Figure 3A is a schematic view showing the difference values obtained by converting the differences in Figure 2C into a two-valued system,

Figure 3B is a graph showing the histogram obtained by addition of the difference values in Figure 3A, with respect to individual positions along an axis.

Figure 4A is a graph showing the histogram different from that in Figure 3B,

Figure 4B is a graph showing the quantum levels of the image information at the respective picture elements in the case where the histogram of Figure 4A is obtained,

Figure 5A is a schematic view showing the original image constituted by preliminary read-out image information at respective picture elements in another embodiment of the read-out condition adjusting method in accordance with the present invention,

Figure 5B is a schematic view showing the processed image obtained by a median filter processing of the original image of Figure 5A,

Figures 6A and 6B are schematic views showing the positions in the processed image of Figure 5B and the masks used for conducting the differentiation processing,

Figures 7 and 8A to 8D are schematic views showing the masks used for finding new remark points,

Figures 9A to 9E is an explanatory views showing the method of finding new remark points by use of the mask of Figure 7,

Figures 10A to 10G are explanatory views showing the method of finding new remark points by use of the masks of Figures 8A to 8D,

Figures 11 and 12A to 12D are schematic views showing the masks used for finding new remark points in a further embodiment of the read-out condition adjusting method in accordance with the present invention,

Figures 13A to 13E are explanatory views showing the method of finding new remark points by use of the mask of Figure 11,

Figures 14A to 14I are explanatory views showing the method of finding new remark points by use of the masks of Figures 12A to 12D,

Figure 15 is an enlarged view of the upper left corner portion of the stimulable phosphor sheet shown in Figure 1 and showing the digital image signals at respective positions in a still further embodiment of the read-out condition adjusting method in accordance with the present invention,

Figures 16A, 16B and 16C are schematic views showing differentiated images respectively obtained by one-dimensional first order differentiation of the digital image signal values of Figure 15 in the x direction, one-dimensional first order differentiation thereof in the y direction, and two-dimensional first order differentiation thereof in the x and y directions,

Figures 17A to 17G are schematic views showing examples of the multi-valued image templates,

Figures 18 and 19 are partially enlarged views showing the multi-valued image templates,

Figure 20 is a schematic view showing the stimulable phosphor sheet and the radiation exposure field in another embodiment of the read-out condition adjusting method in accordance with the present invention,

Figures 21A, 21B and 21C respectively are an enlarged view showing the portion G of Figure 20, a schematic view showing the digital image signal values at respective positions at the portion G, and a schematic view showing the differentiated values at the respective positions,

Figure 22 is a graph showing the digital image signal values on line Lxn of Figure 20,

Figure 23 is a graph showing the differentiated values of the digital image signal values on line Lxn,

Figure 24 is a graph showing another example of the digital image signal values on line Lxn,

Figures 25A and 25B are schematic views showing the stimulable phosphor sheets exposed to a radiation by limiting the radiation exposure field in a circular form and in a rectangular form,

Figure 26 is a schematic view showing the stimulable phosphor sheet and the radiation exposure field in a further embodiment of the read-out condition adjusting method in accordance with the present invention,

Figure 27 is a graph showing the digital image signal values on line Lxn of Figure 26, and

Figure 28 is a graph showing the differentiated values of the digital image signal values on line Lxn of Figure 26.

DESCRIPTION OF THE PREFERRED EMBODIMENTS

The present invention will hereinbelow be described in further detail with reference to the accompanying drawings.

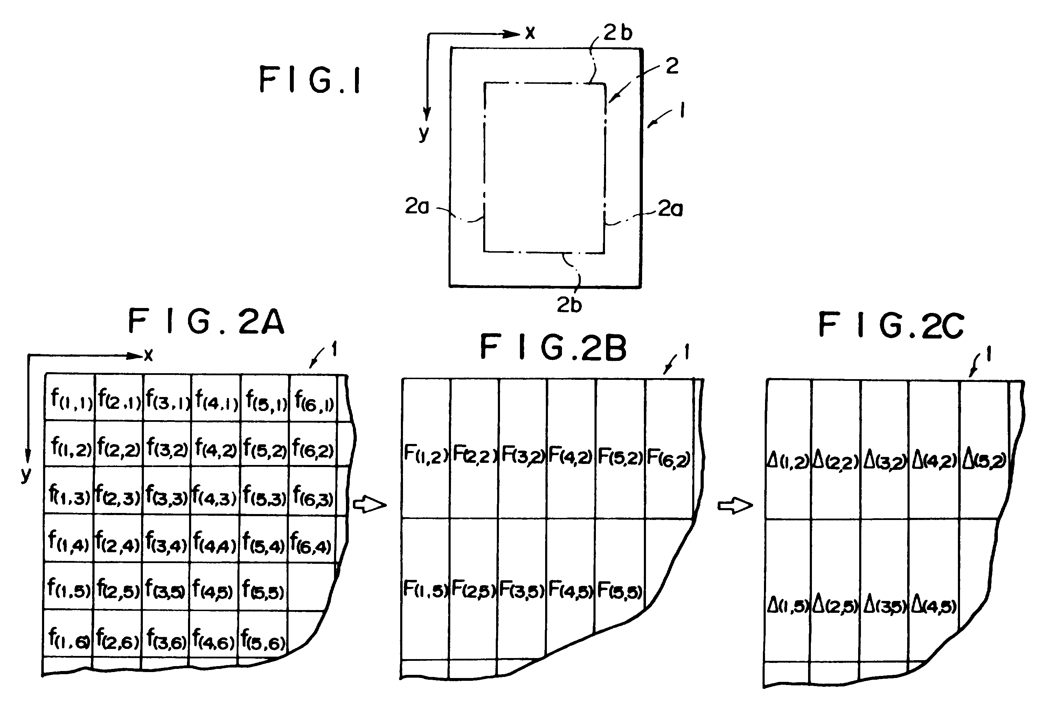

Referring to Figure 1, a stimulable phosphor sheet 1 is exposed to a radiation by limiting a radiation exposure field 2 in a rectangular form as indicated by the chain line.

First, the x and y axes are selected along two adjacent sides of the rectangular contour of the radiation exposure field 2 indicated by the chain line. When the contour of the stimulable phosphor sheet 1 and the contour of the radiation exposure field 2 are parallel with each other as shown in Figure 1, the selected x and y axis directions generally coincide with the main scanning direction and the sub-scanning direction in preliminary read-out and/or final read-out.

Then, the position of an exposure field contour 2a in the y axis direction is detected as described below.

First, digital image signal values at respective positions on the stimulable phosphor sheet 1 are detected from image information obtained by the preliminary read-out. In this embodiment, as shown in Figure 2A, digital image signal values $f(x,y)$ are obtained by detecting the light emitted by picture elements on the sheet 1 by use of a photoelectric read-out means in the preliminary read-out. The line of f(1,1), f(2,1), f(3,1), ..., in the x axis direction is taken as the first line, and the line of f(1,2), f(2,2), f(3,2), ..., is taken as the second line. In the same manner, the third line, the fourth line, and the subsequent lines are determined sequentially. Then, the digital image signal values f(x,y) are pre-processed by one-dimensionally smoothing each set of three lines to obtain digital image signals F(x,y) at respective positions as shown in Figure 2B. Specifically, the first line, the second line and the third line are one-dimensionally smoothed by calculating as shown below.

$$(f_{(1,1)} + f_{(1,2)} + f_{(1,3)})/3 = F_{(1,2)}$$

$$(f_{(2,1)} + f_{(2,2)} + f_{(2,3)})/3 = F_{(2,2)}$$

$$.$$

$$.$$

$$.$$

$$(f_{(1,4)} + f_{(1,5)} + f_{(1,6)})/3 = F_{(1,5)}$$

$$(f_{(2,4)} + f_{(2,5)} + f_{(2,6)})/3 = F_{(2,5)}$$

$$.$$

$$.$$

$$.$$

In the same manner, all of f(x,y) are one-dimensionally smoothed at three-line intervals to obtain digital image values F(x,y) at the respective positions. Therefore, in this case, three picture elements adjacent in the y axis direction are selected as one position, and the digital image signal at this position is obtained by arithmetic averaging of f(x,y) at the three picture elements.

The smoothing may be conducted at any line intervals. When it is conducted at n line intervals, F(x,y) is expressed by

$$F_{(x,y)} = \frac{1}{n} \sum_{y_i = y - \frac{n}{2}}^{y + \frac{n}{2}} f_{(x,y_i)}$$

In the smoothing method, since the arithmetic averaging is effected in the x axis direction when the edge of the radiation exposure field in the y axis direction is detected, the edge is not blurred in the y axis direction, and it is possible to decrease noise adversely affecting the edge extraction in the differentiation processing conducted later. Also, since the calculation is simple, the smoothing can be carried out quickly.

After digital image values F(x,y) at the respective positions are obtained, they are subjected to a differentiation processing in which differences between digital image values F(x,y) at positions present in the vicinity are calculated. In this embodiment, as shown in Figure 2C, differences Δ(x,y) between image values F(x,y) at positions adjacent in the x axis direction are calculated. Namely, the differentiation processing is conducted by

$$|F_{(1,2)} - F_{(2,2)}| = \Delta_{(1,2)}$$

$$|F_{(2,2)} - F_{(3,2)}| = \Delta_{(2,2)}$$

.

.

.

$$\left|F_{(1,5)} - F_{(2,5)}\right| = \Delta_{(1,5)}$$

$$\left|F_{(2,5)} - F_{(3,5)}\right| = \Delta_{(2,5)}$$

.

.

.

The differentiation processing in the present invention embraces not only the case where the differences between image signals adjacent to each other are obtained but also the case where the differences between image values alternately adjacent to each other in the x axis direction, i.e. between F(1,2) and F(3,2) and so on, are calculated.

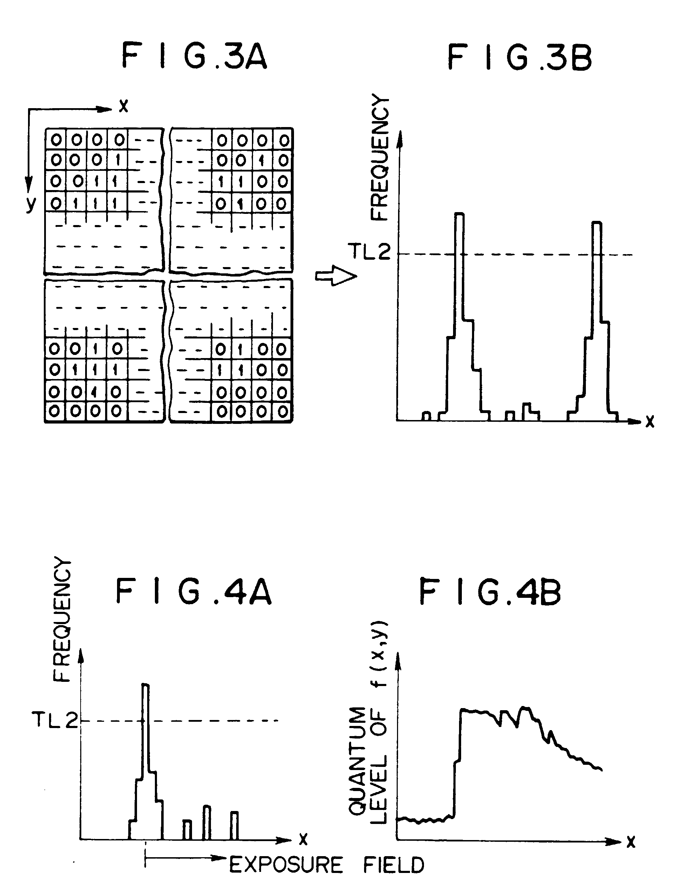

Then, an appropriate threshold value TL1 is determined, and differences $\Delta(x,y)$ are converted into two-valued system, i.e. "1" when they are not smaller than TL1 and "0" when they are smaller than TL1. In this manner, the difference signals as shown in Figure 3A are obtained.

The smoothing method and the differentiation processing method described above are mere examples, and the differentiation processing may be conducted without smoothing, or by using Laplacian operators. However, the aforesaid methods are advantageous since the calculation can be conducted quickly and the edge of the radiation exposure field can be detected more securely than the edges of the bone or the like in the object.

Then, the two-valued difference signal values $\Delta'(x,y)$ are added in the y axis direction. Specifically, the difference signal values on the same x coordinate are added in the y axis direction by formulas

$$\Delta'_{(1,2)} + \Delta'_{(1,5)} + \cdots\cdots\cdots$$

$$\Delta'_{(2,2)} + \Delta'_{(2,5)} + \cdots\cdots\cdots$$

$$\Delta'_{(3,2)} + \Delta'_{(3,5)} + \cdots\cdots\cdots$$

.

.

.

and the histogram as shown in Figure 3B is created. In the histogram, the x coordinates at which the frequency is larger than a predetermined threshold value TL2 are judged as the positions of the exposure field contours 2a in the y axis direction.

When no x coordinate at which the frequency exceeds the threshold value TL2 is present, it is recognized that the radiation exposure field was not limited. When there is only one x coordinate at which the frequency exceeds the threshold value TL2 as shown in Figure 4A, the quantum levels of the original f(x,y) are investigated as shown in Figure 4B, and the side exhibiting a higher average quantum level is judged as the radiation exposure field.

After the positions (x coordinates) of the exposure field contours 2a in the y axis direction are detected, the positions (y coordinates) of exposure field contours 2b in the x axis direction shown in Figure 1 are detected in the same manner. Specifically, image signals F(x,y) at the respective positions are detected by smoothing a plurality of lines of f(x,y) in the y axis direction, and differences $\Delta(x,y)$ between F(x,y) adjacent in the y axis direction are calculated. The differences $\Delta(x,y)$ are converted into two-valued system by using a predetermined threshold value TL1', and the two-valued signals are added in the x axis direction to create a histogram. The y coordinates at which the frequency exceeds a predetermined threshold value TL2' are judged as the positions of the exposure field contours 2b in the x axis direction. When there is no such y coordinate or when there is only one such y coordinate, judgement is made in the same manner as for the contours 2a in the y axis direction.

When the positions of the exposure field contours 2b in the x axis direction are detected, since the positions of the exposure field contours 2a in the y axis direction have already been detected, it is sufficient that the aforesaid processing is conducted only on the image signals f(x,y) between the exposure field contours 2a in the y axis direction. Thus it is possible to increase the speed of detecting the radiation exposure field.

The radiation exposure field is detected as described above, and then the read-out conditions for the final read-out are adjusted on the basis of the preliminary read-out image information within the radiation exposure field. The read-out conditions may be adjusted in various manners, for example, by obtaining a histogram of the light emission amounts within the radiation exposure field as described above, calculating the maximum light emission amount Smax and the minimum light emission amount Smin from the histogram, and adjusting the read-out conditions such as the read-out gain (sensitivity) and the scale factor (latitute) on the basis of Smax and Smin.

Thereafter, the final read-out is carried out by use of the adjusted read-out conditions. In the final read-out, the read-out region should preferably be limited within the detected radiation exposure field.

In the aforesaid embodiment, since the image information obtained by the preliminary read-out is proportional to the level of radiation energy incident on the stimulable phosphor sheet, predetermined positions are set on the sheet, and differences between image signal values at positions in the vicinity are calculated. Since the differences become large when the exposure field contour is present between the compared positions, the position of the radiation exposure field is detected on the basis of the differences. In some cases, the differences at the boundary between soft tissues and the bone or the like within the radiation exposure field may become nearly equal to those at the exposure field contour, and it becomes necessary to discriminate between them. In such a case, the exposure field contour may be detected in various manners, for example, by utilizing the shape of the exposure field known in advance as in the aforesaid embodiment and adding the differences along the contour of the exposure field shape.

The aforesaid embodiment may also be applied to the cases of radiation exposure fields of various shapes other than rectangle, for example, circular radiation exposure fields, by calculating the differences in appropriate directions in accordance with the shapes of the radiation exposure fields and by using appropriate judgement methods such as addition.

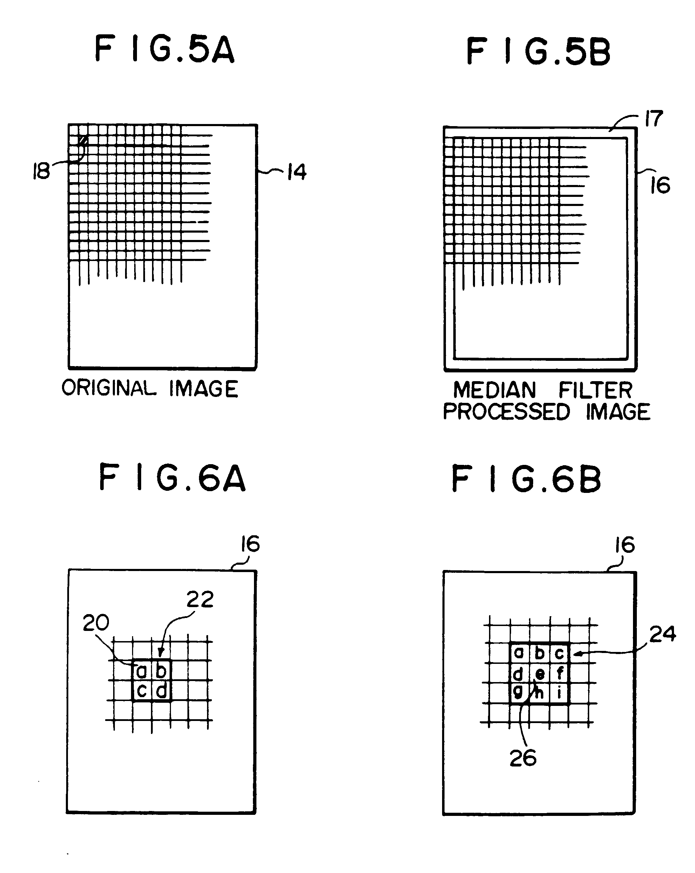

In the present invention, the radiation exposure field may also be detected by, in the differentiated image constituted by the differentiated values obtained by the differentiation processing, selecting an arbitrary position at which the differentiated value is the maximum or not smaller than a predetermined value as a first remark point, finding a position at which the differentiated value is the maximum among the positions adjacent the first remark point and selecting said position as a second remark point, finding a position at which the differentiated value is the maximum among the positions adjacent the second remark point and outside of the previous remark point and selecting said position as a third remark point, thereafter repeating the step of finding the third remark point to find new remark points sequentially until a position adjacent said first remark point is found as a new remark point, and recognizing the inside of the closed curve passing through the found remark points as the radiation exposure field. Such an embodiment will be described below with reference to Figures 5A to 10G. In this embodiment, the positions adjacent the remark point need not necessarily be all of the positions which are adjacent the remark point. For example, when the shape of the radiation exposure field is known in advance, only a part of the positions adjacent the remark point that are fixed by the shape of the radiation exposure field may be considered as the aforesaid positions adjacent the remark point.

In this embodiment, digital image signal values at respective positions on the stimulable phosphor sheet may be detected by conducting a pre-processing such as a spatial filter processing. In this case, the positions on the sheet may be determined in the picture element unit, and the digital image signal value at each position may be calculated on the basis of the preliminary read-out image information on a plurality of the picture elements corresponding to the position and positions therearound. As the calculation method, it is possible to use the median filter processing in which the median value of the image information (quantization levels) at a predetermined picture element (position) and the picture elements (positions) therearound is employed as the image information at the predetermined picture element (position).

An example of the median filter processing will be described with reference to Figures 5A and 5B. Figure 5A shows an original image 14 constituted by the preliminary read-out image information at respective picture elements indicated by cells. Figure 5B shows a median filter processed image 16 constituted by digital image signal values obtained at respective positions by carrying out the median filter processing on the image information at respective picture elements in the original image. In this embodiment, since the positions are determined in the picture element unit, the respective positions in the processed image 16 are also referred to as the picture elements.

First, a mask 18 having a predetermined size, for example, the 3x3 size covering 3x3 picture elements, is positioned on the original image 14 so that the mask center coincides with a predetermined picture element indicated by hatching in Figure 5A. The median value of the image information at nine picture elements covered by the mask is digitized and detected as the digital image signal value at the predetermined picture element. This processing is conducted for all picture elements of the original image 14 outside of those at the peripheral portion 17. Thus digital image signal values at the picture elements are detected, and the median filter processed image 16 constituted by the digital image signal values is obtained. When the 3x3 size mask is used, since the median filter processing cannot be applied to the picture elements at the peripheral portion 17 of the image, the processing image 16 becomes smaller by the picture elements at the peripheral portion 17 than the original image 14. In this case, zero quantization level may be assigned as the image signals to the picture elements at the peripheral portion 17. The mask size is not limited to 3x3. Also, in order to prevent the processed image 16 from becoming small, the median filter processing may be conducted by assuming that picture elements having the same quantization levels as those of the picture elements at the peripheral portion of the original image are present around the original image 14. The median filter processing is advantageous in that noise causing the quantization level of the picture element to become extremely higher or lower than those of the surrounding picture elements can be eliminated and that the information on the exposure field contour is not blurred.

The aforesaid pre-processing is not limited to the median filter processing and may be any spatial filter processing insofar as unnecessary information such as noise is eliminated while the necessary information on the exposure field contour or the like is maintained.

After the digital image signals at the respective positions on the stimulable phosphor sheet are detected, the digital image signal values are subjected to a differentiation processing, and a differentiated image constituted by the differentiated values is created. The differentiation processing may be conducted in any manner, for example, as described below.

Figures 6A and 6B show processed images in which each cell indicates one position. For example, when the digital image signal at a predetermined position 20 in the processed image 16 is differentiated, a mask 22 having a size of 2x2 picture elements may be used as shown in Figure 6A. The mask 22 is positioned so that the left upper portion thereof coincides with the predetermined position 20. Digital image signal values a, b, c and d at four positions covered by the mask 22 are subjected to a calculation by

$$a' = \sqrt{(a - d)^2 + (b - c)^2}$$

and a' thus obtained is taken as the differentiated value at the predetermined position 20. The differentiating calculation is conducted for respective positions. Or, the differentiation processing may be carried out by calculating

$$a' = \sqrt{(a - b + c - d)^2 + (a - c + b - d)^2}$$

Of course, other differentiation formulas may be used.

Further, besides the first order differentiation processing described above, a second order differentiation processing may be conducted. For example, as shown in Figure 6B, a mask 24 having the size of 3x3 picture elements may be positioned so that the mask center coincides with a predetermined position 26. In this case, digital image signal values a, b, c, d, e, f, g, h and i at nine positions covered by the mask 24 are subjected to a calculation by

$$e' = \left| e - \frac{a + b + c + d + f + g + h + i}{8} \right|$$

and e' thus obtained is taken as the differentiated value at the predetermined position 26.

Thereafter, the contour of the radiation exposure field is detected on the basis of the differentiated image created as described above. Since the quantum level of the differentiated value of the image signal at the exposure field contour becomes higher than those of differentiated values of image signal at the other positions as described above, the position in the differentiated image at which the differentiated value is the maximum or not smaller than a value predetermined appropriately may be recognized as the exposure field contour. Also, the exposure field contour is formed by one closed curve. Therefore, when one position at which the exposure field contour is present is remarked, there is always a new position at which the exposure field contour is present among the surrounding positions adjacent the remarked position, and the differentiated value at the new position is larger than those at the surrounding positions adjacent the new position. Stated differently, the exposure field contour is present at least at the position exhibiting the maximum differentiated value among the adjacent positions.

Accordingly, in this embodiment, the exposure field contour is detected by sequentially tracking the positions in the differentiated image at which the exposure field contour is present. The embodiment comprises the step of detecting the tracking start point a first remark point, and the step of tracking the contour positions from the first remark point.

First, the differentiated image is scanned to find an arbitrary position at which the differentiated value is the maximum or not smaller than a predetermined value, and the found position is selected as the first remark point.

Since the differentiated value at the position where the exposure field contour is present is larger than those at the other positions as described above, when an appropriately predetermined value is used, the position at which the differentiated value is not smaller than the predetermined value may be regarded as the position where the exposure field contour is present. Also, the position at which the differentiated value is the maximum may be regarded as the position at which the exposure field contour is present. Therefore, one of the positions at which the exposure field contour is present is first detected as described above, and is selected as the first remark point.

Then, tracking of the exposure field contour is started from the first remark point to recognize the radiation exposure field. In the tracking, the position at which the differentiated value is the maximum is found from among the positions adjacent the first remark point, and is selected as a second remark point. The position at which the differentiated value is the maximum is then found from among the positions adjacent the second remark point and outside of the previous remark point (i.e. the first remark point), and is selected as a third remark point. The step of finding the third remark point is repeated to find new remark points sequentially. When a position adjacent the first remark point is found as the new remark point, the inside of the closed curve passing through the remark points thus found is recognized as the radiation exposure field.

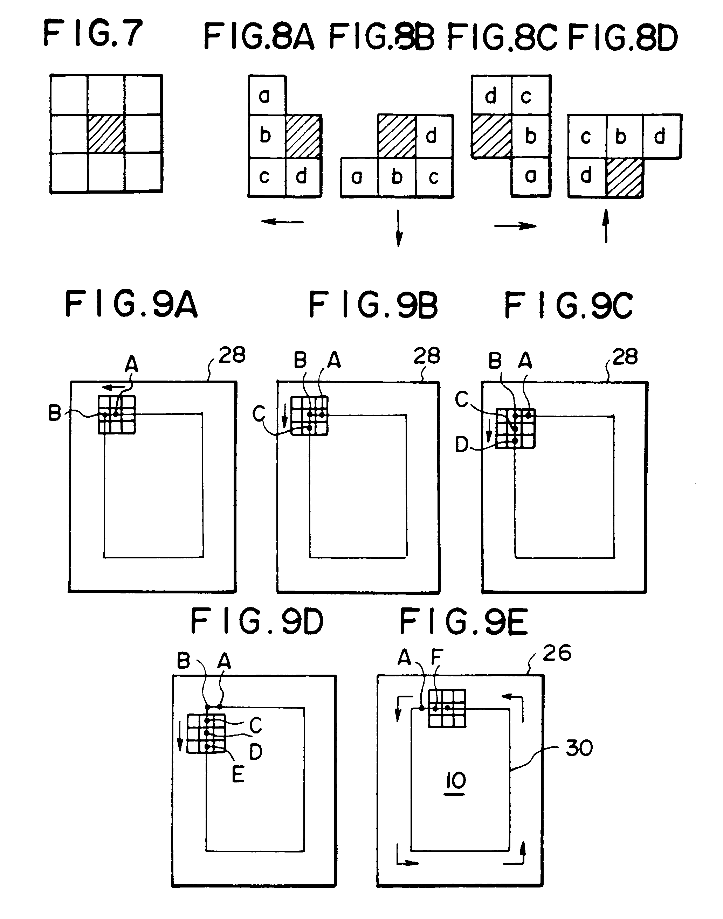

The above-mentioned tracking may be conducted by use of masks as shown in Figures 7 and 8A to 8D.

The mask shown in Figure 7 has a size of 3x3 picture elements. For example, when the rectangular exposure field contour as shown in Figures 9A to 9E is tracked, the mask is first positioned as shown in Figure 9A so that the mask center hatched in Figure 7 coincides with the first remark point A which is present on the exposure field contour in a differentiated image 28 and which has been detected as described above. The position exhibiting the maximum differentiated value among the positions within the mask and outside of the first remark point A is selected as the second remark point B. Then, as shown in Figure 9B, the mask is moved until the mask center coincides with the second remark point B, and the position exhibiting the maximum differentiated value among the positions within the mask and outside of the previous remark points, i.e. the first remark point A and the second remark point B is selected as the third remark point C. In the same manner, the fourth remark point D and the fifth remark point E are respectively found as shown in Figures 9C and 9D. When a position adjacent the first remark point A is found as a new n'th remark point F as shown in Figure 9E, the inside of a closed curve 30 passing through the found remark points A to F is recognized as a radiation exposure field 10. In Figures 9A to 9E, the arrows indicate the tracking direction for finding the exposure field contour.

Unlike the mask shown in Figure 7 which covers all of the eight picture elements adjacent the remark point, the masks shown in Figures 8A to 8D are fabricated to cover only a part (four picture elements) adjacent the remark point and are selected in accordance with the tracking direction. In Figures 8A to 8D, the arrows indicate the tracking directions when the masks are used.

Tracking of a rectangular radiation exposure field conducted by use of the masks of Figures 8A to 8D will be described below.

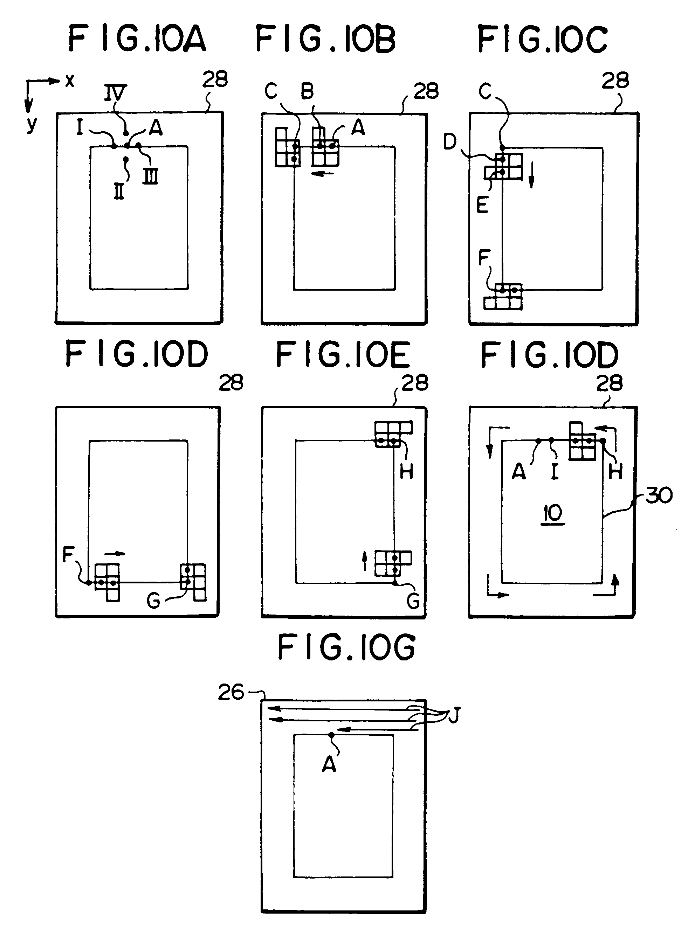

First, as shown in Figure 10A, the differentiated image is scanned to find the position where the differentiated value is the maximum and the position is selected as the first remark point A, the position exhibiting the maximum differentiated value is found from among positions I, II, III and IV adjacent the first remark point A in the x and y axis directions, and tracking is started from the first remark point A towards the position exhibiting the maximum differentiated value. For example, when the position I exhibits the maximum differentiated value, tracking is started leftwardly towards the position I.

In this case, since the tracking direction is leftward, the mask shown in Figure 8A is used. As shown in Figure 10B, the mask is positioned so that the mask portion hatched in Figure 8A coincides with the first remark point A. The position exhibiting the maximum differentiated value among the positions within the mask and outside of the first remark point A is found as the second remark point B. Then, the mask is moved until the mask portion hatched in Figure 5A coincides with the second remark point B, and the position exhibiting the maximum differentiated value among the positions within the mask and outside of the previous remark points, i.e. the first and second remark points A and B is found as the third remark point. This step is repeated to find new remark points sequentially. Until the position at the left upper corner is found as a new remark point C as shown in Figure 10B, since the tracking direction is leftward, a portion b of the mask shown in Figure 8A always corresponds to the position exhibiting the maximum differentiated value, and remark point detection is continued by use of the mask of Figure 8A. However, after the position C at the left upper corner is found as the remark point and then a portion d of the mask of Figure 8A corresponds to the position exhibiting the maximum differentiated value, remark point detection is continued by use of the mask shown in Figure 8B. Specifically, as shown in Figure 10C, the mask of Figure 8B is positioned so that the hatched mask portion coincides with the remark point D, and the next remark point E is detected. Until the position at the left lower corner is found as a remark point F, since the tracking direction is downward, a portion b of the mask of Figure 8B always corresponds to the position exhibiting the maximum differentiated value, and remark point detection is continued by use of the mask of Figure 8B. After the position at the left lower corner is found as the remark point F and then the portion d of the mask of Figure 8B corresponds to the position exhibiting the maximum differentiated value, the mask shown in Figure 8C is used to detect remark points as shown in Figure 10D. After the position at the right lower corner is found as a remark point G and then the portion d of the mask of Figure 8C corresponds to the position exhibiting the maximum remark point, the mask shown in Figure 8D is used to continue remark point detection as shown in Figure 10E. In the same manner, after the position at the right upper corner is found as a remark point H and then the mask portion d corresponds to the position exhibiting the maximum differentiated value, the mask shown in Figure 8A is used to continue remark point detection as shown in Figure 10F. When a position adjacent the first remark point A is found as a new remark point I, the inside of the closed curve passing through the found remark points is regarded as the radiation exposure field 10. In Figures 10A to 10F, the arrows indicate the tracking directions.

In this embodiment, the position exhibiting the maximum differentiated value in the differentiated image is selected as the first remark point. Also when an arbitrary point where the differentiated value is not smaller than a predetermined value is selected as the first remark point, tracking may be conducted in the same manner. However, when the masks of Figures 8A to 8D are used, since the mask used is different in accordance with the tracking direction, it is necessary to determine the tracking direction. In this case, as shown in Figure 10G, it is also possible to select the scanning direction as indicated by the arrow J for finding the first remark point A as the tracking direction, and initially use the mask for the direction.

When zero is assigned to the peripheral picture element portion 17 in the processed image 16 as shown in Figure 5B, even though the radiation exposure field is not limited inside of the stimulable phosphor sheet, the differentiated values at the picture elements at the peripheral portion 17 substantially constituting the exposure field contour become large, and the picture element portion is detected as the exposure field contour. When zero is not assigned to the peripheral picture element portion 17 in the processed image 16, the same results may be obtained by conducting the differentiation processing by assuming that zero is present at the periphery.

This embodiment is applicable also to the case of subdivision image recording in which the stimulable phosphor sheet is divided into some divisions and image recording is conducted on each division by limiting the radiation exposure field. In this case, since the radiation exposure field is present at each division, the embodiment may be applied to each division by obtaining in advance the information on the subdivision image recording.

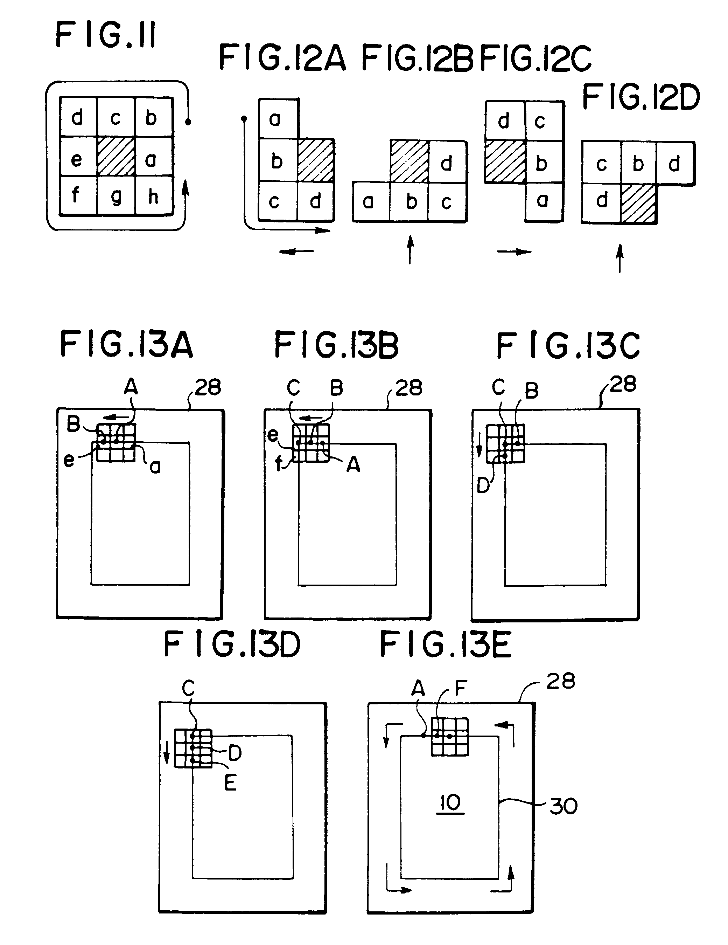

In this embodiment, after the first remark point is found, the second and subsequent remark points are selected by sequentially finging the position exibiting the maximum differentiated value from among the positions adjacent the preceding remark point and outside of the previous remark point or points. However, it is also possible to select the second and subsequent remark points by sequentially finding the position at which the differentiated value is not smaller than a predetermined value from among the positions adjacent the preceding remark point and outside of the previous remark point or points. Such an embodiment will hereinbelow be described with reference to Figures 11 to 14l.

In this embodiment, in the tracking of the exposure field contour starting from the first remark point detected in the same manner as described above, when there is only one position at which the differentiated value is not smaller than the predetermined value among the positions adjacent the preceding remark point, the position may be selected as the next remark point. When there are two or more such positions, a position may be selected as the next remark point in accordance with a priority sequence predetermined for the positions adjacent the preceding remark point. Or, an arbitrary position or the position exhibiting the maximum differentiated value may be selected as the next remark point from such two or more positions. When no such position is present, the position exhibiting the maximum differentiated value among the positions adjacent the preceding remark point may be selected as the next remark point.

The tracking may be conducted as described below by use of the masks shown in Figures 11 and 12A to 12D.

Figures 13A to 13E show the tracking method using the mask of Figure 11. First, as shown in Figure 13A, the mask is positioned so that the mask center hatched in Figure 11 coincides with the first remark point A detected as described above to be present on the exposure field contour, and a position at which the differentiated value is not smaller than the predetermined value among the positions within the mask and outside of the first remark point A is selected as the second remark point. When there are two or more positions exhibiting differentiated values not smaller than the predetermined value, the position exhibiting the maximum differentiated value may be selected. In this example, since portions a and e of the mask correspond to the exposure field contour positions, the differentiated values at the positions corresponding to the portions a and e are not smaller than the predetermined value. Further, since the differentiated value at the portion e is larger than that at the portion a, the position corresponding to the portion e is selected as the second remark point B.

Then, as shown in Figure 13B, the mask is moved until the mask center coincides with the second remark point B, and the position at which the differentiated value is not smaller than the predetermined value among the positions within the mask and outside of the first remark point A and the second remark point B is selected as the third remark point C. When there are two or more positions exhibiting the differentiated values not smaller than the predetermined value, the third remark point is selected in accordance with the predetermined priority sequence which may be determined in various manners. In this embodiment, as shown in Figure 11, when the portion a corresponds to the preceding remark point, the priority is predetermined counterclockwise in the sequence of b, c, d, e, f, g and h starting from the portion a. Therefore, in Figure 13B, the positions corresponding to the portions e and f exhibit the differentiated values not smaller than the predetermined value among the positions expected as the third remark point, and the position corresponding to the portion e which has the priority to that at the portion f is selected as the third remark point C.

The subsequent remark points are selected in the same manner. When the position adjacent the first remark point A is selected as a new remark point as shown in Figure 13E, the inside of the closed curve 30 passing through the first remark point A to the n'th remark point F is recognized as the radiation exposure field 10.

In this embodiment, it is also possible to determine a clockwise priority sequence. In this case, the tracking direction becomes clockwise.

Tracking of the rectangular exposure field using the masks shown in Figures 12A to 12D will be described below.

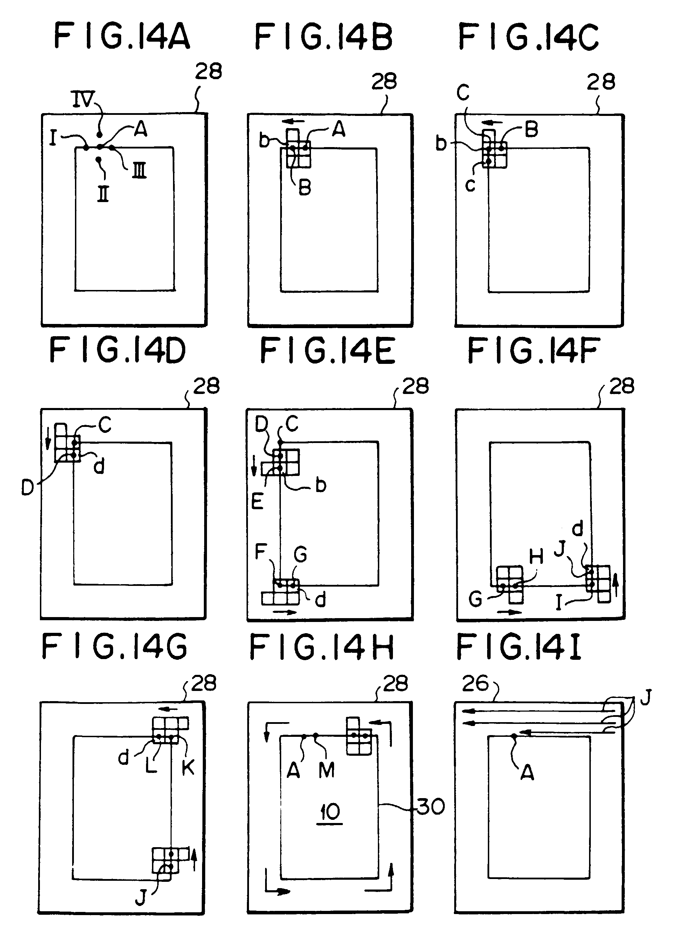

In Figure 14A, the initial tracking direction is selected leftwardly towards the position I in the same manner as described with reference to Figure 10A. Since the tracking direction is leftward, the mask of Figure 12A is used and positioned so that the hatched mask portion coincides with the first remark point A as shown in Figure 14B. Among the positions within the mask, the position at which the differentiated value is not smaller than the predetermined value and which is outside of the first remark point A is found and selected as the second remark point. In the case shown, since only the position corresponding to the mask portion b exhibits a differentiated value not smaller than the predetermined value, the position is selected as the second remark point B.

Then, as shown in Figure 14C, the mask is moved until the hatched mask portion coincides with the second remark point B, and the position at which the differentiated value is not smaller than the predetermined value among the positions within the mask and outside of the previous remark points, i.e. the first and second remark points A and B, is selected as the third remark point. In this example, since the positions corresponding to the portion b and c exhibit differentiated values not smaller than the predetermined value and the priority is predetermined in the sequence of a, b, c and d as indicated by the long arrow in Figure 12A, the position corresponding to the portion b is selected as the third remark point C.

Thereafter, since the tracking direction from the second remark point B to the third remark point C is still leftward, the mask of Figure 12A is used and moved until the hatched mask portion coincides with the third remark point C as shown in Figure 13D. In this condition, the position at which the differentiated value is not smaller than the predetermined value is selected as the fourth remark point. In the example shown, since only the position at the mask portion d exhibits the differentiated value not smaller than the predetermined value, the position is selected as the fourth remark point D.

When the fifth remark point E is then selected, since the tracking direction from the third remark point C to the fourth remark point D is downward, the mask of Figure 12B is used and moved until the hatched mask portion coincides with the fourth remark point D. Thus in the condition shown in Figure 14E, the position at which the differentiated value is not smaller than the predetermined value is found as the fifth remark point. In the case shown, since only the position at the portion b exhibits the differentiated value not smaller than the predetermined value, the position is selected as the fifth remark point E.

New remark points are then found sequentially in the same manner. When the position at the left lower corner is found as a new remark point F, the mask is positioned as shown in Figure 14E, and the next remark point is found. In this case, since only the position at the mask portion d exhibits the differentiated value not smaller than the predetermined value, the position is selected as the next remark point G. When the next remark point is found, since the tracking direction becomes rightward, the mask of Figure 12C is used and positioned so that the hatched mask portion coincides with the remark point G as shown in Figure 14F. The next remark point is selected in the manner as described above.

Thereafter, remark point detection is continued by using the mask of Figure 12C. When the position at the right lower corner is found as a new remark point I as shown in Figure 14F, since the next remark point J is at the mask portion d, the tracking direction becomes upward, and tracking is continued by use of the mask of Figure 12D. When the position at the right upper corner is found as a new remark point K as shown in Figure 14G, since the next remark point L is at the mask portion d, the tracking direction becomes leftward, and tracking is continued by use of the mask of Figure 12A as shown in Figure 14H.

When the position adjacent the first remark point A is found as a new n'th remark point M as shown in Figure 14H, the inside of the closed curve 30 passing through the first remark point A to the n'th remark point M is regarded as the radiation exposure field 10.

In this embodiment, the tracking direction may be maintained the same and the mask may not be changed when the next remark point appears at portion a, b or c, and the mask may be changed only when the next remark point appears at the portion d. This also applies to the case of the mask shown in Figure 11.

Also, when the masks of Figures 12A to 12D are used, the scanning direction for finding the first remark point A as indicated by the arrows J may be selected as the tracking direction as shown in Figure 14I, and the mask for the selected direction may be used initially.

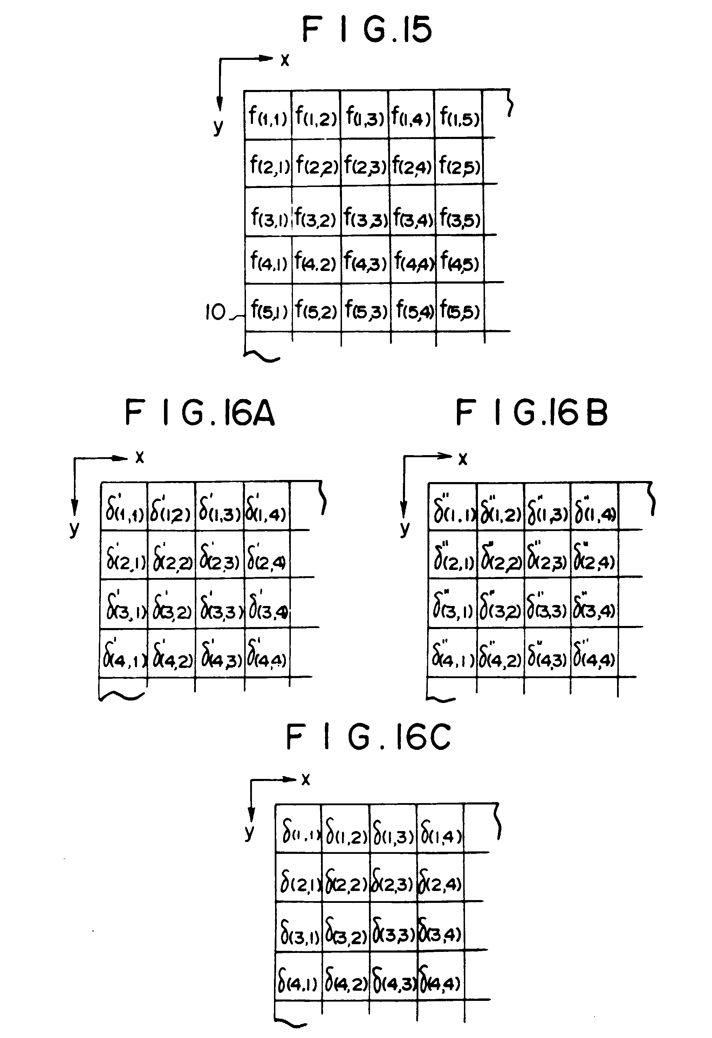

In the present invention, the radiation exposure field may also be detected by creating the differentiated image constituted by the differentiated values at the respective positions, preparing a plurality of multi-valued image templates each having a portion corresponding to the exposure field contour and provided with values different between positions within said portion corresponding to the exposure field contour and positions within the other portions wherein the shape and the size of said portion corresponding to the exposure field contour are different between said templates in accordance with the shape and the size of exposure field contour in the limitation of the radiation exposure field effected in actual image recording, calculating the correlations between the differentiated values on said differentiated image or values obtained by processing the differentiated values and the values on the respective templates, and recognizing the inside of the exposure field contour corresponding portion of the template exhibiting the maximum correlation as the radiation exposure field. Such an embodiment will hereinbelow be described with reference to Figures 15 to 18.

Figure 15 is an enlarged view of the left upper corner portion of the stimulable phosphor sheet 1 of Figure 1 and shows the digital image signals f(1,1), f(1,2), ... at picture elements (1,1), (1,2), ... In this embodiment, the positions on the stimulable phosphor sheet are set in the picture element unit.

In this embodiment, as shown in Figures 16A, 16B and 16C, the digital image signal values are subjected to the two-dimensional first order differentiation processing. First, the digital image signal values are subjected to the one-dimensional first order differentiation in the x axis direction to obtain differentiated values $\delta'$ at respective positions, which are equivalent to image signal differences between adjacent positions in the x axis direction and are expressed by

$$\delta' (1, 1) = f (1, 1) - f (1, 2)$$

$$\delta' (1, 2) = f (1, 2) - f (1, 3)$$

$$.$$

$$.$$

$$.$$

$$.$$

$$\delta' (2, 1) = f (2, 1) - f (2, 2)$$

$$\delta' (2, 2) = f (2, 2) - f (2, 3)$$

$$.$$

$$.$$

$$.$$

$$.$$

Then, the one-dimensional first order differentiatio is conducted in the y axis direction to obtain differentiated values $\delta''$ at respective positions, which are expressed by

$$\delta'' (1, 1) = f (1, 1) - f (2, 1)$$

$$\delta'' (1, 2) = f (1, 2 ) - f (2, 2)$$

$$.$$

$$.$$

$$.$$

$$.$$

$$\delta'' (2, 1) = f (2, 1) - f (3, 1)$$

$$\delta'' (2, 2) = f (2, 2) - f (3, 2)$$

.

.

.

.

Two-dimensional first order differentiated values δ at respective positions are then calculated on the basis of the differentiated values δ' and δ", for example, by adding the absolute values thereof.

$$\delta (1, 1) = |\delta' (1, 1)| + |\delta" (1, 1)|$$

$$\delta (1, 2) = |\delta' (1, 2)| + |\delta" (1, 2)|$$

.

.

.

.

$$\delta (2, 1) = |\delta' (2, 1)| + |\delta" (2, 1)|$$

$$\delta (2, 2) = |\delta' (2, 2)| + |\delta" (2, 2)|$$

.

.

.

.

Thereafter, a differentiated image constituted by the differentiated values δ at respective positions is created. In this embodiment, the differentiated values δ are always positive. However, since the differentiated values may become negative in accordance with the positions on the stimulable phosphor sheet, for example, when the differentiated image is created by one-dimensional first order differentiation processing, the absolute values thereof are handled as the differentiated values on the differentiated image. Though the differentiated image is created by directly using the differentiated values δ in this embodiment, it is also possible to create the differentiated image by converting the differentiated values δ into the two-valued system by use of a predetermined threshold value.

After the differentiated image is created as described above, correlations between the differentiated image and a plurality of multi-valued image templates prepared in advance are calculated, and the radiation exposure field is detected on the basis of the correlations.

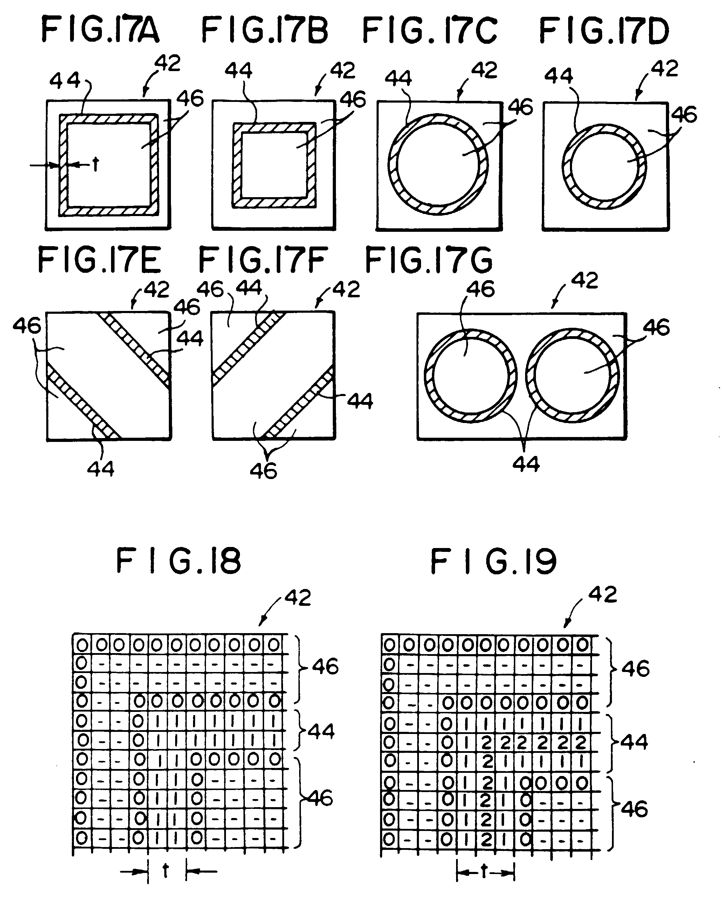

Figures 17A to 17G show examples of a plurality of the multi-valued image templates prepared in advance. Each template 42 has an exposure field contour corresponding portion 44 hatched in the drawing. Respective positions within the exposure field contour corresponding portion 44 are provided with values, for example, not smaller than 1, the respective positions within the other portions 46 are provided, for example, with a value 0. The shape and the size of the exposure field contour corresponding portion 44 are different between the templates 42 in accordance with the shape and the size of the exposure field contour in the exposure field limitation effected in actual image recording.

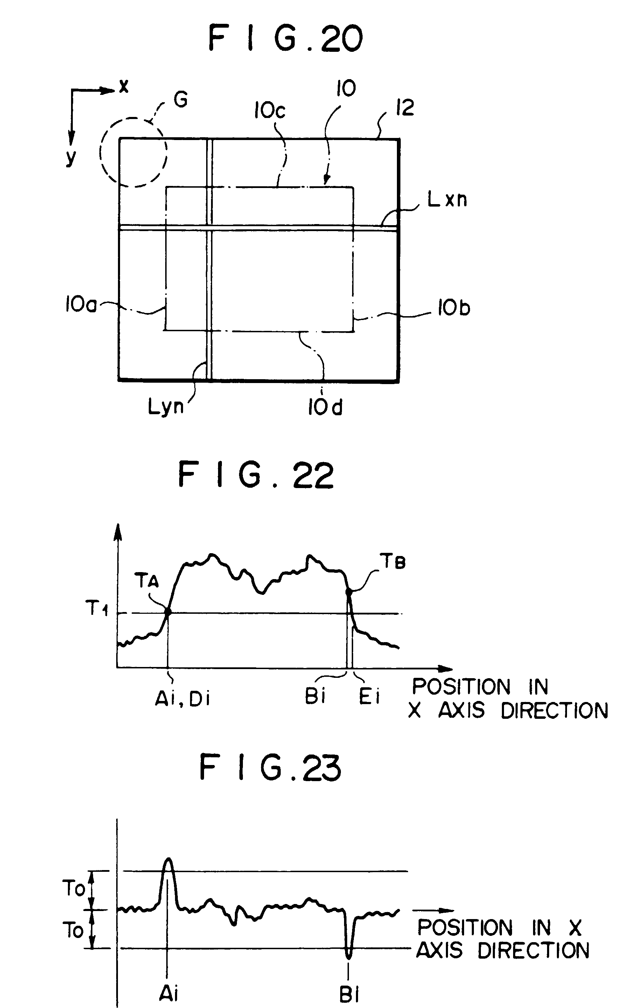

The size of the template 42 should preferably be equal to that of the stimulable phosphor sheet 1 shown in Figure 1 (or the differentiated image. The exposure field contour corresponding portion 44 has a predetermined width t which may correspond to the total width of two or three positions as shown in Figures 18 and 19, and may correspond to the width of one position or the total width of four or more positions. By "shape of exposure field contour corresponding portion" is meant the rectangular shape as shown in Figures 17A and 17B, the circular shape as shown in Figures 17C and 17D, or the like. By "size of exposure field contour corresponding portion" is meant the length of one side of the rectangle, the diameter of the circle, or the like. The templates 42 shown in Figures 17E and 17F have the exposure field contour corresponding portion 44 for the case where the radiation exposure field is limited obliquely, and that shown in Figure 17G has the exposure field contour corresponding portion 44 for the case where the radiation exposure field is limited in the circular form and the subdivision image recording is conducted. The respective positions on the template 42 correspond to the respective positions on the differentiated image. However, they need not necessarily correspond in one-to-one relation and, for example, one position on the template 42 may correspond to 2x2 positions adjacent to each other on the differentiated image. As shown in Figure 18, the respective positions within the exposure field contour corresponding portion 44 may be provided with the same value, i.e. a value 1. Or, as shown in Figure 19, they may be provided with two values, i.e. 2 at the center and 1 on two sides. Of course, they may be provided with three or more values, and the values may be assigned in any manner.

Then, the correlations between the differentiated image and the template images are calculated. That is, similarity between the images is digitized by calculating as described below. Thereafter, the inside of the exposure field contour corresponding portion of the template image exhibiting the maximum correlation is recognized as the radiation exposure field.

Specifically, in this embodiment, the differentiated values (i.e. the differentiated values themselves or the values obtained by converting the differentiated values into the two-valued system) at the respective positions on the differentiated image are multiplied by the values at the corresponding positions on each template, and the total of the products is calculated. When the positions on the differentiated image and those on the template correspond in one-to-one relation, values at the corresponding positions are multiplied. When four positions on the differentiated image correspond to one position on the template, the respective differentiated values at the four positions are multiplied by the value at the single position on the template. After multiplication between the corresponding positions is carried out over the whole area of the template, the products are added.

Addition of the products is conducted for the respective templates, and the inside of the exposure field contour corresponding portion of the template exhibiting the maximum sum of products is regarded as the radiation exposure field.

Since the differentiated values at positions where the exposure field contour is present are larger than those at the other positions as described above, the sum of the products in the case of the template having the exposure field contour corresponding portion 44 which just coincides with the exposure field contour becomes larger than that in the cases of the other templates. Therefore, when many templates having various exposure field contour corresponding portions in accordance with the shapes and sizes of expected exposure field contours are prepared and the template exhibiting the maximum product sum is selected by conducting the multiplication between the differentiated image and the respective templates as described above and adding the products, it may be regarded that the actual exposure field contour is present within the exposure field contour corresponding portion 44 of the selected template. Thus it is possible to recognize that the inside of the exposure field contour corresponding portion 44 as the radiation exposure field. When the portion 44 has some width, the inside of any position within the portion 44, for example, the inside of the inner edge, the outer edge or the center of the width portion, may be recognized as the radiation exposure field.

In another embodiment of the read-out condition adjusting method, digital image signal values at respective positions on the stimulable phosphor sheet or a sheet portion having one radiation exposure field are detected on the basis of the image information obtained by the preliminary read-out, the respective positions forming in line in a predetermined direction on said stimulable phosphor sheet or said sheet portion are set as a line, the digital image signal values on said line are subjected to the differentiation processing, two positions at which the absolute values of the differentiated values exceed a predetermined value To are selected as prospective exposure field contour points on said line, the minimum value T1 of said digital image signal values on said line between said prospective exposure field contour points is detected, two outer positions at which said digital image signal values are equal to said minimum value T1 on said line are detected as exposure field contour points on said line, said detection of said exposure field contour points is conducted for respective lines within a predetermined range on said stimulable phosphor sheet or said sheet portion, and the inside of a contour line or lines passing through said exposure field contour points on the respective lines is recognized as the radiation exposure field. Such an embodiment will hereinbelow be described with reference to Figures 20 to 25B.

Figure 20 shows a stimulable phosphor sheet 12 having one radiation exposure field 10, and Figure 21A is an enlarged view of the portion G of the sheet 12 shown in Figure 20. In this embodiment, the respective positions on the sheet 12 are set in the picture element unit.

After digital image signal values f(1,1), f(2,1), ... at picture elements or positions (1,1), (2,1), ... are detected, the respective positions forming a line in a predetermined direction on the sheet 12 are set as one line. The line setting may be effected in only one direction or in two directions. Of course, it may also be effected in more directions.

In this embodiment, lines are set in the x axis and y axis directions normal to each other. Specifically, positions (1,1), (2,1), (3,1), (4,1), (5,1), ... forming in line in the x axis direction are set as the first x axis line Lx1, and positions (1,2), (2,2), (3,2), (4,2), (5,2), ... forming in line are set as the second x axis line Lx2. The third x axis line Lxa, the fourth x axis line Lx4, ... are set in the same manner. Also, positions (1,1), (1,2), (1,3), (1,4), ... forming in line in the y axis direction are set as the first y axis line Ly1, and positions (2,1), (2,2), (2,3), (2,4), ... are set as the second y axis line Ly2. The third y axis line Ly3, the fourth y axis line Ly4, ... are set in the same manner.

Then, the digital image signal values on each line are subjected to the differentiation processing to detect exposure field contour points on the line as described below by taking the n'th x axis line Lxn shown in Figure 20 as an example.

Figure 22 shows the levels of the digital image signal at the respective positions on the line Lxn, and Figure 23 shows the differentiated values obtained at the respective positions by the differentiation processing of the digital image signal values on the line Lxn.

First, differentiated values $\delta$ at the respective positions on the line Lxn are obtained as shown below by conducting the first order differentiation of the digital image signals on the line Lxn.

$$\delta\,(1,\,n) = f\,(\,1,\,n) - f\,(2,\,n)$$

$$\delta\,(2,\,n) = f\,(\,2,\,n\,) - f\,(3,\,n)$$

.

.

.

Then, as shown in Figure 23, positions Ai and Bi at which the absolute values of the differentiated values are not smaller than a predetermined value To are selected as prospective exposure field contour points on the line Lxn. Since the exposure field contour line is generally a closed curve, one line intersects with the closed contour curve at two points, and therefore two contour points are present on one line. As a result, two prospective contour points are detected.

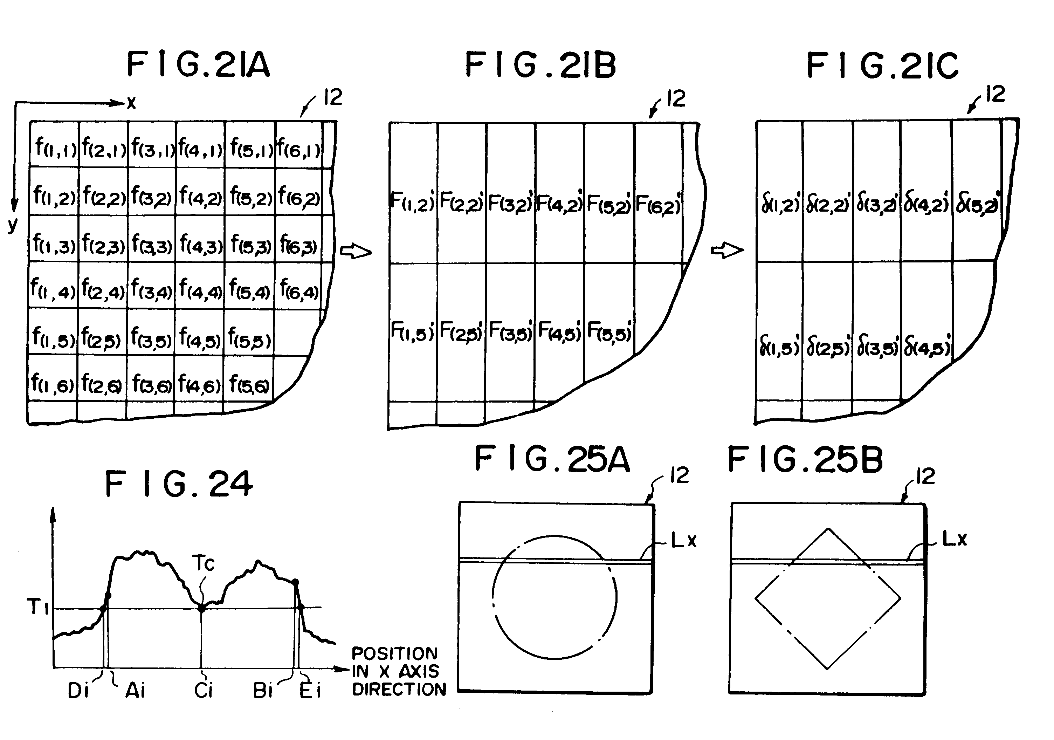

As shown in Figure 22, the minimum value T1 of the digital image signal values on the line Lxn between the prospective exposure field contour points Ai and Bi is then detected. In this embodiment, an image signal TA at the prospective exposure field contour point Ai is the minimum digital image signal value between the prospective exposure field contour points Ai and Bi. However, in some cases, as shown in Figure 24, an image signal TC at a position Ci between the positions Ai and Bi may become the minimum value T1.

After the minimum value T1 is detected, two outer positions at which the digital image signal values are equal to the minimum value T1 on the line Lxn are detected as exposure field contour points Di and Ei on the line Lxn. Stated differently, the positions between Di and Ei at which the digital image signal values are not smaller than the minimum value T1 are judged as the exposure field region on the line Lxn.

In this embodiment, since the digital image signal value TA at the prospective exposure field contour points Ai is equal to the minimum value T1, there are only two positions (Di and Ei) at which the digital image signal values are equal to the minimum value T1, and the positions Di and Ei are automatically detected as the two outer positions. However, when the digital image signal value TC at the position Ci between Ai and Bi is equal to the minimum value T1 as shown in Figure 24, three positions (Di, Ci and Ei) are detected as the positions at which the image signals are equal to the minimum value T1. In this case, the outer positions Di and Ei outside of Ci are detected as the exposure field contour points.

When the exposure field contour points Di and Ei are detected with reference to the minimum image signal value T1 between the prospective exposure field contour points Ai and Bi, it becomes possible to detect a relatively wide radiation exposure field and to eliminate the risk of the detected exposure field becoming narrower than the actual exposure field.

Detection of the exposure field contour points on one line as described above is conducted for respective x axis lines Lx over the whole area in the y axis direction, and contour lines 10a and 10b in the y axis direction shown in Figure 20 are detected by connecting the exposure field contour points on the respective lines Lx.

In the same manner, exposure field contour points on an arbitrary y axis line Lyn are detected, and detection of the contour points is conducted for the respective y axis lines Ly over the whole area in the x axis direction. Contour lines 10c and 10d in the x axis direction are detected by connecting the contour points on the respective lines Ly. The inside of the contour lines 10a, 10b, 10c and 10d, i.e. the region surrounded thereby, is recognized as the radiation exposure field.

In the aforesaid embodiment, detection of the contour points is carried out for the lines over the whole region on the sheet 12. However, it may be conducted only for lines within a predetermined region on the sheet 12. For example, when the region of the radiation exposure field is approximately known, the contour point detection may be conducted only for the lines within the region. Or, the contour point detection may first be conducted for the x axis lines Lx to detect the contour lines 10a and 10b in the y axis direction, and then be conducted only for the y axis lines Ly between the contour lines 10a and 10b.

In the aforesaid embodiment, contour point detection need not necessarily be conducted for lines in two directions. For example, when the radiation exposure field has a circular shape or an inclined rectangular shape as shown in Figures 25A and 25B, the whole exposure field contour may be detected by conducting the contour point detection only for the lines Lx in the x axis direction.

Also, exposure field detection may be conducted by setting the positions as described below. First, as shown in Figure 21B, sets of three picture elements adjacent in the y axis direction in Figure 21A may be set as respective positions as expressed by

$$\text{Position } (1,2)' = \text{picture elements } (1,1) + (1,2) + (1,3)$$

$$\text{Position } (2,2)' = \text{picture elements } (2,1) + (2,2) + (2,3)$$

$$.$$

$$.$$

$$.$$

$$\text{Position } (1,5)' = \text{picture elements } (1,4) + (1,5) + (1,6)$$

$$\text{Position } (2,5)' = \text{picture elements } (2,4) + (2,5) + (2,6)$$

$$.$$

$$.$$

$$.$$

Digital image signals F at respective positions are calculated by

$$F_{(1, 2)'} = (f_{(1, 1)} + f_{(1, 2)} + f_{(1, 3)})/3$$

$$F_{(2, 2)'} = (f_{(2, 1)} + f_{(2, 2)} + f_{(2, 3)})/3$$

$$.$$

$$.$$

$$.$$

$$F_{(1, 5)'} = (f_{(1, 4)} + f_{(1, 5)} + f_{(1, 6)})/3$$

$$F_{(2, 5)'} = (f_{(2, 4)} + f_{(2, 5)} + f_{(2, 6)})/3$$

$$.$$

$$.$$

The image signal values F are subjected to the differentiation processing for each line in the x axis direction to obtain differentiated values $\delta$ at the respective positions, and the exposure field contour line in the y axis direction is detected by using the differentiated values $\delta$ in the same manner as described above. Then, sets of three picture elements adjacent in the x axis direction are set as respective positions as expressed by

Position (2,1)' = picture elements (1,1) + (2,1) + (3,1)

Position (2,2)' = picture elements (1,2) + (2,2) + (3,2)

.

.

.

Position (5,1)' = picture elements (4,1) + (5,1) + (6,1)

Position (5,2)' = picture elements (4,2) + (5,2) + (6,2)

.

.

.

Digital image signal values F at the respective positions are calculated by arithmetic averaging as described above, and are differentiated for each line in the y axis direction to obtain differentiated values $\delta$, which are then used to detect the exposure field contour line in the x axis direction in the same manner as described above.

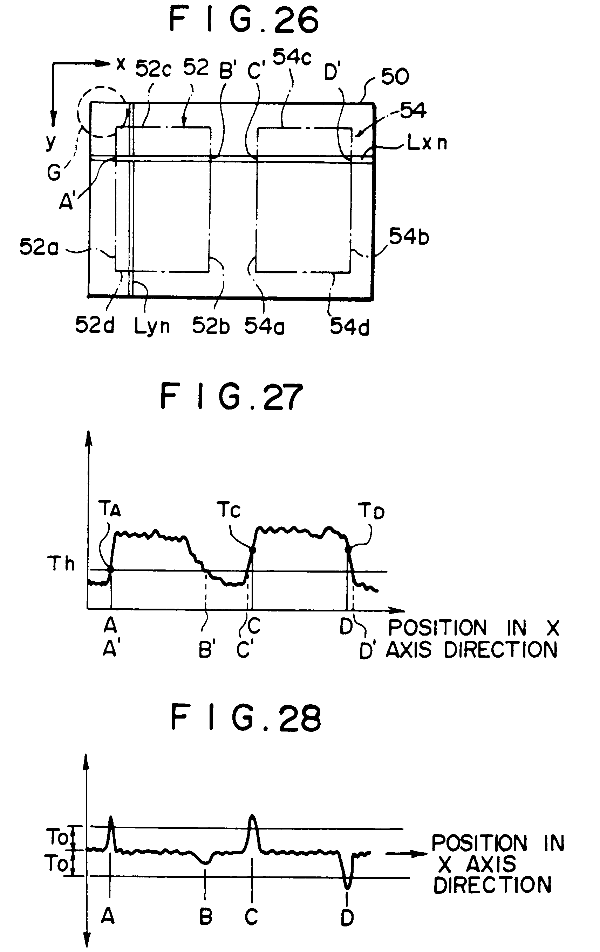

In a further embodiment of the read-out condition adjusting method, the respective positions forming in line in a predetermined direction on said stimulable phosphor sheet are set as a line, said digital image signal values on said line are subjected to the differentiation processing, at least one position at which the absolute value of the differentiated value exceeds a predetermined value To is selected as an exposure field contour point on said line, and when there is an undetected latent contour point among a plurality of the exposure field contour points actually present on said line, the digital image signal value at said position at which the absolute value of the differentiated value exceeds the predetermined value To on said line is detected, a characteristic value Th of said digital image signal is determined from said digital image signal value, a position outside of said position at which the absolute value of the differentiated value exceeds the predetermined value To or outside of a position in the vicinity of said position among those at which the digital image signal values are equal to said characteristic value Th on said line is recognized as said latent contour point, said detection of said exposure field contour points is conducted for respective lines within a predetermined range on said stimulable phosphor sheet, and the inside of a contour line or lines passing through said exposure field contour points on the respective lines is recognized as the radiation exposure field. Such an embodiment will hereinbelow be described with reference to Figures 26, 27 and 28.

In Figure 26, a stimulable phosphor sheet 50 is divided into two sections, and a radiation image is recorded in each section by limiting the radiation exposure field.

In this embodiment, respective positions on the stimulable phosphor sheet are set in the picture element unit as shown in Figure 21A, and the lines Lxn and Lyn are set in the same manner as described with reference to Figure 20. After the lines are set, exposure field contour points are detected by conducting the differentiation processing and a threshold value processing using a predetermined value To for each line as described below.

Figure 27 shows the levels of the digital image signal at the respective positions on the line Lxn, and Figure 28 shows the differentiated values obtained at the respective positions by the differentiation processing of the digital image signal values on the line Lxn.

The differentiated values at the respective positions on the line Lxn are calculated in the same manner as described with reference to Figure 23, and then positions A, C and D at which absolute values of the differentiated values exceeds the predetermined value To are detected as the exposure field contour points on the line Lxn.

However, the absolute values of the differentiated values do not always exceed the predetermined value To. Specifically, though a right contour line 52b of a right exposure field 52 is present, the change in the image signals at the right contour line 52b may be small as shown in Figure 27, and the absolute value of the differentiated value at the position B of the right contour line 52b may not exceed the predetermined value To as shown in Figure 28.

In this case, as shown in Figure 27, digital image signals TA, TC and TD on the line Lxn at the contour points A, C and D detected by the threshold value processing using the predetermined value To are detected. Then, a characteristic value Th of the digital image signal values TA, TC and TD is determined on the basis of these digital image signal values.

17

The characteristic value Th may be any value insofar as it is based on the image signals TA, TC and TD, and may be the minimum value, average value, median value or maximum value of TA, TC and TD. In this embodiment, TA which is the minimum value between the three values is adopted as the characteristic value Th.

Thereafter, as shown in Figure 27, positions A', B', C' and D' at which the digital image signals are equal to the characteristic value Th are detected, and the position B' outside of the positions A', C' and D' which are equal to or near the positions A, C and D exhibiting the absolute values of the differentiated values exceeding the predetermined value To is recognized as the latent contour point. This is because the positions A, C and D and the positions A', C' and D' equal to or near the positions A, C and D respectively correspond to the same contour points, and the other position B' corresponds to the latent contour point which could not be detected by the aforesaid differentiation processing and the threshold value processing.

In this manner, all of the four contour points present on the line Lxn can be detected. In this case, though the single position B' is detected as the contour point corresponding to the contour line 52b in the y axis direction since it was the latent contour point, the positions A and A', C and C' and D and D' are respectively detected as the contour points corresponding to the contour lines 52a, 54a and 54b in the y axis direction. Any of the positions A and A', C and C', and D and D' may be respectively employed as the contour points corresponding to the contour lines 52a, 54a and 54b.

Detection of the all contour points on the x axis line Lxn is conducted for the x axis lines Lx over the whole region in the y axis direction, and the contour lines 52a, 52b, 54a and 54b in the y axis direction are detected by connecting the contour lines on the respective lines Lx.

Also for an arbitrary line Lyn in the y axis direction, all of the contour points on the line are detected in the same manner. As shown in Figure 26, there are two contour points on the line Lyn. When one of the contour points is not detected by the differentiation processing and the threshold value processing, the latent contour point is detected in the same manner as described above. In this case, since only one contour point is detected by the differentiation processing and the threshold value processing, the characteristic value Th is determined from the digital image signal at the single contour point. For example, the digital image signal value itself may be selected as the characteristic value Th. The contour point detection is conducted for respective y axis lines Ly over the whole region in the x axis direction. The contour points on the lines Ly are connected to determine the contour lines 52c, 52d, 54c and 54d in the x axis direction. The inside of the contour lines 52c, 52d, 54c and 54d and the contour lines 52a, 52b, 54a and 54b, i.e. the region surrounded by these contour lines, is recognized as the radiation exposure field.

In a still further embodiment of the read-out condition adjusting method, the respective positions forming a line in a predetermined direction on said stimulable phosphor sheet are set as a line, said digital image signal values on said line are subjected to the differentiation processing, at least one position at which the absolute value of the differentiated value exceeds a predetermined value To is selected as a prospective exposure field contour point on said line, the digital image signal value at said prospective exposure field contour point on said line is detected, a characteristic value Th of said digital image signal is determined from said digital image signal value, positions at which the digital image signal values are equal to said characteristic value Th on said line are detected as the exposure field contour points on said line, said detection of said exposure field contour points is conducted for respective lines within a predetermined range on said stimulable phosphor sheet, and the inside of a contour line or lines passing through said exposure field contour points on the respective lines is recognized as the radiation exposure field.

This embodiment is similar to that described with reference to Figures 26, 27 and 28, except that the positions A, C and D at which the absolute values of the differentiated values exceed the predetermined value To as shown in Figure 28 are selected as prospective exposure field contour points, and the positions A', B', C' and D' at which the digital image signals are equal to the characteristic value Th as shown in Figure 27 are detected as the exposure field contour points on the line Lxn. Stated differently, the positions (A' to B', C' to D')at which the digital image signals are not smaller than the characteristic value Th are judged as the exposure field contour region on the line Lxn.

The embodiment mentioned last is applicable not only to the case where the contour line 52b cannot be detected by the differentiation processing and the threshold value processing but also to the case where all of the contour lines can be detected thereby. In the method of detecting the contour line positions by the differentiation processing and the threshold value processing, it is necessary to to judge whether all of the contour line positions could be detected or not. When there is an undetected contour line, some processing must be conducted for detecting the contour line. Thus the algorithm up to the final exposure field detection becomes complicated. However, in the embodiment mentioned last, all of the contour line positions can be detected automatically regardless of whether they could be detected by the initial differentiation processing and the threshold value processing or not, and the algorithm becomes simple.

**Claims**

1. A method of detecting the contour of an exposure field of a latent radiation image, said exposure field comprising at least one object which scatters radiation outside said exposure field, in an image read-out process in which the image is photoelectrically read out to obtain image information in the form of digital image signal values corresponding to the image density level, the method comprising the steps of detecting digital image signal values ($f(x, y)$) at respective positions on said image on the basis of the image information obtained by said photoelectric read-out, subjecting said digital image signal values to a one- or two-dimensional differentiation processing of first or higher order to obtain differentiated values ($\Delta, a', e', \delta, \delta', \delta''$), and detecting that the exposure field contour is present at a position when the criterion is met that a differentiated value related to said position is larger than a predetermined threshold value.

2. A method as defined in claim 1, wherein when said exposure field is rectangular, detection of said exposure field contour effected by use of said differentiated values is conducted by selecting x and y axes along two adjacent sides of the rectangle, calculating the differentiated values for the image signal values along each of plural lines in the x axis direction, adding said differentiated values at each of the x-coordinates in the y axis direction to form a first sum to judge the position of the exposure field contour on the x axis, calculating the differentiated values for the image signal values along each of plural columns in the y axis direction, and adding said differentiated values at each of the y-coordinates in the x axis direction to form a second sum to judge the position of said exposure field contour on the y axis wherein an exposure field contour line along any one of said axes is assumed at a respective coordinate position thereof where the respective one of said first or second sum is larger than a predetermined threshold value.

3. A method as defined in claim 1, wherein said exposure field is detected in a differentiated image constituted by said differentiated values obtained by said differentiation processing, by selecting an arbitrary position at which the differentiated value is the maximum or not smaller than a predetermined value as a first remark point, finding a position at which the differentiated value is the maximum among the positions adjacent said first remark point and selecting said position as a second remark point, finding a position at which the differentiated value is the maximum among the positions adjacent said second remark point and outside of the previous remark point and selecting said position as a third remark point, thereafter repeating the step of finding said third remark point to find new remark points sequentially until a position adjacent said first remark point is found as a new remark point, and determining a closed curve passing through the found remark points wherein said closed curve constitutes said exposure field contour.

4. A method as defined in claim 1, wherein said exposure field is detected in a differentiated image constituted by said differentiated values obtained by said differentiation processing, by selecting an arbitrary position at which the differentiated value is the maximum or not smaller than a predetermined value as a first remark point, finding a position at which the differentiated value is not smaller than the predetermined value among the positions adjacent said first remark point and selecting said position as a second remark point, finding a position at which the differentiated value is not smaller than the predetermined value among the positions adjacent said second remark point and outside of the previous remark point and selecting said position as a third remark point, thereafter repeating the step of finding said third remark point to find new remark points sequentially until a position adjacent said first remark point is found as a new remark point, and determining a closed curve passing through the found remark points whereby said closed curve constitutes said exposure field contour wherein when a plurality of positions at which the differentiated values are not smaller than the predetermined value are present among said adjacent positions at the state of finding said second and subsequent new remark points, a priority direction is determined in advance for said adjacent positions, and the next new remark point is selected in accordance with said priority direction from the plurality of said positions at which the differentiated values are not smaller than the predetermined value, and wherein when no position at which the differentiated value is not smaller than the predetermined value is present among said adjacent positions at the stage of finding said second and subsequent new remark points, the position exhibiting the maximum differentiated value among said adjacent positions is selected as the next new remark point.

5. A method as defined in claim 1, wherein said exposure field is detected by creating a differentiated image constituted by said differentiated values at the respective positions, preparing a plurality of multi-valued image templates each having a portion corresponding to an exposure field contour and provided with values different between positions within said portion corresponding to the exposure field contour and positions within the other portions wherein the shape and the size of said portion corresponding to the exposure field contour are different between said templates in accordance with the shape and the size of exposure field contour in the limitation of said exposure field effected in actual image recording, calculating the correlations between said differentiated values of said image, or values obtained by processing said differentiated values, and the values on the respective templates, and determining said exposure field contour to be the image portion which corresponds to the portion corresponding to an exposure field contour of that one of said templates which exhibits the maximum correlation to recognise the inside of said exposure field contour as said exposure field.

6. A method as defined in claim 1, wherein digital image signal values at respective positions on the image or an image portion having one exposure field are detected on the basis of the image information obtained by the photoelectric read-out, the respective positions forming a line in a predetermined direction on said image or said image portion are set as a line, said digital image signal values on said line are subjected to the differentiation processing, two positions at which the absolute values of the differentiated values exceed a predetermined value (To) are selected as prospective exposure field contour points on said line, the minimum value (T1) of said digital image signals on said line between said prospective exposure field contour points is detected, the two outer marginal positions at which said digital image signal values are equal to said minimum value (T1) on said line are determined as exposure field contour points on said line, said detection of said exposure field contour points is conducted for respective lines within a predetermined range on said image or said image portion, and the portion of the image enclosed by a contour line or lines passing through said exposure field contour points on the respective lines is determined as said exposure field.

7. A method as defined in claim 1, wherein the respective positions forming a line in a predetermined direction on said image are set as a line, said digital image signal values on said line are subjected to the differentiation processing, at least one position at which the absolute value of the differentiated value exceeds a predetermined value (To) is selected as an exposure field contour point on said line, and when there is an undetected latent contour point among a plurality of the exposure field contour points actually present on said line, the digital image signal value at said position at which the absolute value of the differentiated value exceeds the predetermined value (To) on said line is detected, a characteristic value (Th) of said digital image signal is determined from said digital image signal value, a position other than said position at which the absolute value of the differentiated value exceeds the predetermined value (To) and other than a position in the vicinity of said position among those at which the digital image signal values are equal to said characteristic value (Th) on said line is determined as said latent contour point, said detection of said exposure field contour points is conducted for respective lines within a predetermined range on said image, and the portion of the image enclosed by a contour line or lines passing through said exposure field contour points on the respective lines is determined as the exposure field.

8. A method as defined in claim 1, wherein the respective positions forming a line in a predetermined direction on said image are set as a line, said digital image signal values on said line are subjected to the differentiation processing, at least one position at which the absolute value of the differentiated value exceeds a predetermined value (To) is selected as a prospective exposure field contour point on said line, the digital image signal value at said prospective exposure field contour point on said line is detected, a characteristic value (Th) of said digital image signal is determined from said digital image signal value, positions at which the digital image signal values are equal to said characteristic value (Th) on said line are determined as the exposure field contour points on said line, said determination of said exposure field contour points is conducted for respective lines within a predetermined range on said image, and the portion of the image enclosed by a contour line or lines passing through said exposure field contour points on the respective lines is determined as the exposure field.

9. A method as defined in any one of the claims 6, 7 or 8, wherein x and y axes normal to each other are set on said image or said image portion, and said determination of said exposure field contour points on said line is conducted for the lines in the x axis direction and the lines in the y axis direction.

**Patentansprüche**

1. Verfahren zur Ermittlung der Kontur eines Belichtungsfeldes eines latenten Strahlungsbildes, wobei das Belichtungsfeld wenigstens ein Objekt umfaßt, das Strahlung außerhalb des Belichtungsfeldes zerstreut, in einem Bildauslesevorgang, bei dem das Bild photoelektrisch ausgelesen wird, um Bildinformation in der Form von digitalen Bildsignalwerten zu erlangen, die dem Bilddichtepegel entsprechen, wobei das Verfahren die Schritte umfaßt: Ermitteln von digitalen Bildsignalwerten ($f(x,y)$) an betreffenden Stellen auf dem Bild auf der Basis der durch das photoelektrische Auslesen erlangten Bildinformation, Unterwerfen der digitalen Bildsignalwerte einer ein- oder zweidimensionalen Differenzierungsverarbeitung erster oder höherer Ordnung, um differenzierte Werte ($\Delta$, a', e', $\delta$, $\delta'$, $\delta''$) zu erlangen, und Feststellen, daß die Belichtungsfeldkontur an einer Stelle vorhanden ist, wenn das Kriterium erfüllt wird, daß ein mit der Stelle in Beziehung stehender differenzierter Wert größer als ein vorbestimmter Schwellenwert ist.

**2.** Verfahren nach Anspruch 1, bei dem, wenn das Belichtungsfeld rechteckig ist, die durch Verwenden der differenzierten Werte vorgenommene Ermittlung der Belichtungsfeldkontur durchgeführt wird durch Wählen von X- und Y-Achsen längs zweier aneinandergrenzender Seiten des Rechtecks, Berechnen der differenzierten Werte für die Bildsignalwerte längs jeder einer Mehrzahl von Linien in der X-Achsenrichtung, Addieren der differenzierten Werte an jeder der X-Koordinaten in der Y-Achsenrichtung, um eine erste Summe zu bilden, um die Stelle der Belichtungsfeldkontur auf der X-Achse zu beurteilen, Berechnen der differenzierten Werte für die Bildsignalwerte längs jeder einer Mehrzahl von Spalten in der Y-Achsenrichtung und Addieren der differenzierten Werte an jeder der Y-Koordinaten in der X-Achsenrichtung, um eine zweite Summe zu bilden, um die Stelle der Belichtungsfeldkontur auf der Y-Achse zu beurteilen, wobei eine Belichtungsfeldkonturlinie längs irgendeiner der Achsen an einer betreffenden Koordinatenstelle davon angenommen wird, wo die betreffende der ersten oder zweiten Summe größer als ein vorbestimmter Schwellenwert ist.

**3.** Verfahren nach Anspruch 1, bei dem das Belichtungsfeld in einem differenzierten Bild, das durch die durch die Differenzierungsverarbeitung erlangten differenzierten Werte gebildet wird, ermittelt wird durch Auswählen einer beliebigen Stelle, wo der differenzierte Wert das Maximum oder nicht kleiner als ein vorbestimmter Wert ist, als ein erster Vermerkpunkt, Finden einer Stelle, wo der differenzierte Wert das Maximum unter den an den ersten Vermerkpunkt angrenzenden Stellen ist, und Auswählen der Stelle als ein zweiter Vermerkpunkt, Finden einer Stelle, wo der differenzierte Wert das Maximum unter den an den zweiten Vermerkpunkt angrenzenden und außerhalb des vorangehenden Vermerkpunktes liegenden Stellen ist, und Auswählen der Stelle als ein dritter Vermerkpunkt, danach Wiederholen des Schrittes zum Finden des dritten Vermerkpunktes, um nacheinander neue Vermerkpunkte zu finden, bis eine an den ersten Vermerkpunkt angrenzende Stelle als ein neuer Vermerkpunkt gefunden wird, und Bestimmen einer geschlossenen Kurve, die durch die gefundenen Vermerkpunkte läuft, wobei die geschlossene Kurve die Belichtungsfeldkontur bildet.

**4.** Verfahren nach Anspruch 1, bei dem das Belichtungsfeld in einem differenzierten Bild, das durch die durch die Differenzierungsverarbeitung erlangten differenzierten Werte gebildet wird, ermittelt wird durch Auswählen einer beliebigen Stelle, wo der differenzierte Wert das Maximum oder nicht kleiner als ein vorbestimmter Wert ist, als ein erster Vermerkpunkt, Finden einer Stelle, wo der differenzierte Wert nicht kleiner als der vorbestimmte Wert unter den an den ersten Vermerkpunkt angrenzenden Stellen ist, und Auswählen der Stelle als ein zweiter Vermerkpunkt, Finden einer Stelle, wo der differenzierte Wert nicht kleiner als der vorbestimmte Wert unter den an den zweiten Vermerkpunkt angrenzenden und außerhalb des vorangeheden Vermerkpunktes liegenden Stellen ist, und Auswählen der Stelle als ein dritter Vermerkpunkt, danach Wiederholen des Schrittes zum Finden des dritten Vermerkpunktes, um nacheinander neue Vermerkpunkte zu finden, bis eine an den ersten Vermerkpunkt angrenzende Stelle als ein neuer Vermerkpunkt gefunden wird, und Bestimmen einer geschlossenen Kurve, die durch die gefundenen Vermerkpunkte läuft, wobei die geschlossene Kurve die Belichtungsfeldkontur bildet, wobei, wenn ein Mehrzahl von Stellen, an denen die differenzierten Werte nicht kleiner als der vorbestimte Wert unter den angrenzenden Stellen in dem Zustand des Findens des zweiten und folgender neuer Vermerkpunkte sind, vorhanden sind, eine Vorrangrichtung für die angrenzenden Stellen im voraus bestimmt und der nächste Vermerkpunkt nach Maßgabe der Vorrangrichtung aus der Mehrzahl der Stellen, an denen die differenzierten Werte nicht kleiner als der vorbestimmte Wert sind, ausgewählt wird, und wobei, wenn keine Stelle, an der der differenzierte Wert nicht kleiner als der vorbestimmte Wert unter den angrenzenden Stellen in dem Zustand des Findens des zweiten und folgender neuer Vermerkpunkte ist, vorhanden ist, die Stelle, die den maximalen differenzierten Wert unter den angrenzenden Stellen aufweist, als der nächste neue Vermerkpunkt ausgewählt wird.

**5.** Verfahren nach Anspruch 1, bei dem das Belichtungsfeld ermittelt wird durch Erzeugen eines durch die differenzierten Werte an den betreffenden Stellen gebildeten differenzierten Bildes, Vorbereiten einer Mehrzahl mehrwertiger Bildschablonen mit je einem Teil, der einer Belichtungsfeldkontur entspricht, und versehen mit Werten, die zwischen Stellen innerhalb des Teils, der der Belichtungsfeldkontur entspricht, und Stellen innerhalb der anderen Teile verschieden sind, wobei die Form und die Größe des Teils, der der Belichtungsfeldkontur entspricht, zwischen den Schablonen nach Maßgabe der Form und der Größe der Belichtungsfeldkontur in der bei der tatsächlichen Bildaufnahme durchgeführten Begrenzung des Belichtungsfeldes verschieden sind, Berechnen der Korrelationen zwischen den differenzierten Werten des Bildes oder durch Verarbeiten der differenzierten Werte erlangten Werten und den Werten auf den betreffenden Schablonen und Bestimmen der Belichtungsfeldkontur als den Bildteil, der dem Teil entspricht, der einer Belichtungsfeldkontur dieser einen der Schablonen entspricht, die die maximale Korrelation aufweist, um das Innere der Belichtungsfeldkontur als das Belichtungsfeld zu erkennen.

**6.** Verfahren nach Anspruch 1, bei dem digitale Bildsignalwerte an betreffenden Stellen auf dem Bild oder einem Bildteil mit einem Belichtungsfeld auf der Basis der durch das photoelektrische Auslesen erlangten Bildinformation ermittelt werden, die betreffenden Stellen, die eine Linie in einer vorbestimmten Richtung auf dem Bild oder dem Bildteil bilden, als eine Linie festgelegt werden, die digitalen Bildsignalwerte auf der Linie der Differenzierungsverarbeitung unterworfen werden, zwei Stellen, an denen die Absolutwerte der differenzierten Werte einen vorbestimmten Wert (To) übersteigen, als voraussichtliche Belichtungsfeldkonturpunkte auf der Linie ausgewählt werden, der Minimalwert (T1) des digitalen Bildsignals auf der Linie zwischen den voraussichtlichen Belichtungsfeldkonturpunkten ermittelt wird, die äußeren zwei Randstellen, an denen die digitalen Bildsignalwerte gleich dem Minimalwert (T1) auf der Linie sind, als Belichtungsfeldkonturpunkte auf der Linie ermittelt werden, die Ermittlung der Belichtungsfeldkonturpunkte für betreffende Linien innerhalb eines vorbestimmten Bereiches auf dem Bild oder dem Bildteil durchgeführt wird und der von einer durch die Belichtungsfeldkonturpunkte auf den betreffenden Linien laufenden Konturlinie oder -linien umschlossene Teil des Bildes als das Belichtungsfeld ermittelt wird.

7. Verfahren nach Anspruch 1, bei dem die betreffenden Stellen, die eine Linie in einer vorbestimmten Richtung auf dem Bild bilden, als eine Linie festgelegt werden, die digitalen Bildsignalwerte auf der Linie der Differenzierungsverarbeitung unterworfen werden, wenigstens eine Stelle, an der der Absolutwert des differenzierten Wertes einen vorbestimmten Wert (To) übersteigt, als ein Belichtungsfeldkonturpunkt auf der Linie ausgewählt wird, und wenn es einen unermittelten latenten Konturpunkt unter einer Mehrzahl der tatsächlich auf der Linie vorhandenen Belichtungsfeldkonturpunkte gibt, der digitale Bildsignalwert an der Stelle, an der der Absolutwert des differenzierten Wertes den vorbestimmten Wert (To) auf der Linie übersteigt, ermittelt wird, ein charakteristischer Wert (Th) des digitalen Bildsignals aus dem digitalen Bildsignalwert ermittelt wird, eine Stelle anders als die Stelle, an der der Absolutwert des differenzierten Wertes den vorbestimmten Wert (To) übersteigt, und anders als eine Stelle in der Nachbarschaft der Stelle unter denen, an denen die digitalen Bildsignalwerte gleich dem charakteristischen Wert (Th) auf der Linie sind, als der latente Konturpunkt ermittelt wird, die Ermittlung der Belichtungsfeldkonturpunkte für betreffende Linien innerhalb eines vorbestimmten Bereiches auf dem Bild durchgeführt wird und der von einer durch die Belichtungsfeldkonturpunkte auf den betreffenden Linien laufenden Konturlinie oder -linien umschlossene Teil des Bildes als das Belichtungsfeld ermittelt wird.

8. Verfahren nach Anspruch 1, bei dem die betreffenden Stellen, die eine Linie in einer vorbestimmten Richtung auf dem Bild bilden, als eine Linie festgelegt werden, die digitalen Bildsignalwerte auf der Linie der Differenzierungsverarbeitung unterworfen werden, wenigstens eine Stelle, an der der Absolutwert des differenzierten Wertes einen vorbestimmten Wert (To) übersteigt, als ein voraussichtlicher Belichtungsfeldkonturpunkt auf der Linie ausgewählt wird, der digitale Bildsignalwert an dem voraussichtlichen Belichtungsfeldkonturpunkt auf der Linie ermittelt wird, ein charakteristischer Wert (Th) des digitalen Bildsignals aus dem digitalen Bildsignalwert ermittelt wird, Stellen, an denen die digitalen Bildsignalwerte gleich dem charakteristischen Wert (Th) auf der Linie sind, als die Belichtungsfeldkonturpunkte auf der Linie ermittelt werden, die Ermittlung der Belichtungsfeldkonturpunkte für betreffende Linien innerhalb eines vorbestimmten Bereiches auf dem Bild durchgeführt wird und der von einer durch die Belichtungsfeldkonturpunkte auf den betreffenden Linien laufenden Konturlinie oder -linien umschlossene Teil des Bildes als das Belichtungsfeld ermittelt wird.

9. Verfahren nach einem der Ansprüche 6, 7 oder 8, bei dem X- und Y-Achsen senkrecht zueinander auf dem Bild oder dem Bildteil festgelegt werden und die Ermittlung der Belichtungsfeldkonturpunkte auf der Linie für die Linien in der X-Achsenrichtung und die Linien in der Y-Achsenrichtung durchgeführt wird.

## Revendications

1. Procédé de détection du contour d'un champ d'exposition d'une image de radiation latente, ledit champ d'exposition comprenant au moins un objet qui diffuse le rayonnement en dehors dudit champ d'exposition, lors d'un traitement d'extraction d'image dans lequel l'image est extraite photoélectriquement pour obtenir des informations d'image sous la forme de valeurs de signaux d'image numériques correspondant au niveau de densité d'image, le procédé comprenant les étapes de détection de valeurs de signaux d'image numériques (f(x, y)) à des positions respectives sur ladite image sur la base des informations d'image obtenues par ladite extraction photoélectrique, de soumission desdites valeurs de signaux d'image numériques à un traitement de différenciation uni ou bidimensionnel du premier ordre ou d'ordre supérieur pour obtenir des valeurs différenciées ($\Delta$, a', e', $\delta$, $\delta'$, $\delta''$), et de détection que le contour de champ d'exposition est présent à une position où le critère satisfait qu'une valeur différenciée par rapport à ladite position est plus grande qu'une valeur de seuil prédéterminée.

2. Procédé tel que défini dans la revendication 1, dans lequel lorsque ledit champ d'exposition est rectangulaire, la détection dudit contour de champ d'exposition effectuée par l'utilisation desdites valeurs différenciées est effectuée en sélectionnant les axes x et y le long de deux côtés voisins du rectangle, en calculant des valeurs différenciées pour les valeurs de signaux d'image le long de chacune de plusieurs lignes dans la direction de l'axe x, et en additionnant lesdites valeurs différenciées à chacune des abscisses x dans ladite direction y pour former une première somme pour tester la position du contour de champ d'exposition sur l'axe x, en calculant les valeurs différenciées pour les valeurs de signaux d'image le long de chacune de la pluralité des colonnes dans la direction de l'axe y, et en additionnant lesdites valeurs différenciées à chacune des ordonnées y dans la direction de l'axe x pour former une seconde somme pour tester la position dudit contour de champ d'exposition sur l'axe y où une ligne de contour de champ d'exposition le long d'un quelconque desdits axes est supposée à une position de coordonnée respective de celui-ci où une somme respective de ladite première ou seconde somme est plus grande qu'une valeur de seuil prédéterminée.

3. Procédé tel que défini dans la revendication 1, dans lequel ledit champ d'exposition est détecté dans une image différenciée constituée par lesdites valeurs différenciées obtenues par ledit traitement de différenciation, en sélectionnant une position arbitraire à laquelle la valeur différenciée est le maximum ou n'est pas plus petite qu'une valeur prédéterminée comme un premier point de remarque, en recherchant d'une position à laquelle la valeur différenciée est le maximum parmi les positions voisines dudit premier point de remarque et en sélectionnant ladite position comme un second point de remarque, en recherchant une position à laquelle la valeur différenciée est le maximum parmi les positions voisines dudit second point de remarque et en dehors du point de remarque précédent et en sélectionnant ladite position comme un troisième point de remarque, en répétant ensuite l'étape de recherche dudit troisième point de remarque pour trouver séquentiellement de nouveaux points de remarque jusqu'à ce qu'une position voisine dudit premier point de remarque soit trouvée comme un nouveau point de remarque, et en déterminant une courbe fermée passant par les points de remarque trouvés où ladite courbe fermée constitue ledit contour de champ d'exposition.

4. Procédé tel que défini dans la revendication 1, dans lequel ledit champ d'exposition est détecté dans une image différenciée constituée par lesdites valeurs différenciées obtenues par ledit traitement de différenciation, en sélectionnant une position arbitraire à laquelle la valeur différenciée est le maximum ou n'est pas plus petite qu'une valeur prédéterminée comme un premier point de remarque, en recherchant une position à laquelle la valeur différenciée n'est pas plus petite que la valeur prédéterminée parmi les positions voisines dudit premier point de remarque, et en sélectionnant de ladite position comme un second point de remarque, en recherchant une position à laquelle la valeur différenciée n'est pas plus petite que la valeur prédéterminée parmi les positions voisines dudit second point de remarque et en dehors du point de remarque précédent et en sélectionnant ladite position comme un troisième point de remarque, en répétant ensuite l'étape de recherche dudit troisième point de remarque pour trouver séquentiellement de nouveaux points de remarque jusqu'à ce qu'une position voisine dudit premier point de remarque soit trouvée comme un nouveau point de remarque, et en déterminant une courbe fermée passant par les points de remarque trouvés de sorte que ladite courbe fermée constitue ledit contour de champ d'exposition où lorsqu'une pluralité de positions auxquelles des valeurs différenciées ne sont pas plus petites que la valeur prédéterminée sont présentes parmi lesdites positions voisines à l'étape de recherche dudit second et desdits points de remarque nouveaux qui suivent, une direction de priorité est déterminée à l'avance pour lesdites positions voisines, et le nouveau point de remarque suivant est sélectionné selon ladite direction de priorité à partir de la pluralité desdites positions auxquelles les valeurs différenciées ne sont pas plus petites que la valeur prédéterminée, et où lorsqu'il n'y a pas de position à laquelle la valeur différenciée n'est pas plus petite que la valeur prédéterminée parmi lesdites positions voisines à l'étage de recherche dudit second et desdits nouveaux points de remarque qui suivent, la position montrant la valeur différenciée maximum parmi lesdites positions voisines est sélectionnée comme le nouveau point de remarque suivant.

5. Procédé tel que défini dans la revendication 1, dans lequel ledit champ d'exposition est détecté en créant une image différenciée constituée par lesdites valeurs différenciées aux positions respectives, en préparant une pluralité de modèles d'image multi-valeur ayant chacun une partie correspondant à un contour de champ d'exposition et pourvus de valeurs différentes entre des positions avec ladite partie correspondant au contour de champ d'exposition et aux positions dans les autres parties où la forme et la dimension de ladite partie correspondante au contour de champ d'exposition sont différentes entre lesdits modèles selon la forme et la dimension du contour de champ d'exposition dans la limitation dudit champ d'exposition effectuée dans un enregistrement d'image réel, en calculant les corrélations entre lesdites valeurs différenciées de ladite image, ou les valeurs obtenues en traitant lesdites valeurs différenciées et les valeurs sur les modèles respectifs, et en déterminant ledit contour de champ d'exposition pour qu'il soit la partie d'image qui correspond à la partie correspondant à un contour de champ d'exposition de celui desdits modèles qui montre la corrélation maximum pour reconnaître l'intérieur dudit contour de champ d'exposition comme ledit champ d'exposition.

6. Procédé tel que défini dans la revendication 1, dans lequel les valeurs de signaux d'image numériques à des positions respectives sur l'image ou une partie d'image ayant un champ d'exposition sont détectées sur la base des informations d'image obtenues par l'extraction photoélectrique, les positions respectives formant une ligne dans une direction prédéterminée sur ladite image ou ladite partie d'image sont déterminées comme une ligne, lesdites valeurs de signaux d'image numériques sur ladite ligne sont soumises à un traitement de différenciation, deux positions auxquelles les valeurs absolues des valeurs différenciées dépassent une valeur prédéterminée (To) sont sélectionnées comme des points de contour de champ d'exposition prospectifs sur ladite ligne, la valeur minimum (T1) desdits signaux d'image numériques sur ladite ligne entre lesdits points de contour de champ d'exposition prospectifs est détecté, les deux positions marginales externes auxquelles lesdites valeurs de signaux d'image numériques sont égales à ladite valeur minimum (T1) sur ladite ligne sont déterminées comme des points de contour de champ d'exposition sur ladite ligne, ladite détection desdits points de contour de champ d'exposition est effectuée pour les lignes respectives dans un intervalle prédéterminé sur ladite image où ladite partie d'image, et la partie de l'image enfermée par une ligne de contour ou des lignes passant par lesdits points de contour de champ d'exposition sur les lignes respectives est déterminée comme ledit champ d'exposition.

7. Procédé tel que défini dans la revendication 1, dans lequel les positions respectives formant une ligne dans une direction prédéterminée sur ladite image sont déterminées comme une ligne, lesdites valeurs de signaux d'image numériques sur lesdites lignes sont soumises à un traitement de différenciation, au moins une position à laquelle la valeur absolue de la valeur différenciée dépasse une valeur prédéterminée (To) est sélectionnée comme un point de contour de champ d'exposition sur ladite ligne, et lorsqu'il y a un point de contour latent non-détecté parmi une pluralité de points de contour de champ d'exposition réellement présents sur ladite ligne, la valeur de signal d'image numérique sur ladite position à laquelle la valeur absolue de la valeur différenciée dépasse la valeur prédéterminée (To) sur ladite ligne est détectée, une valeur de caractéristique (Th) dudit signal d'image numérique est déterminée à partir de ladite valeur de signal d'image numérique, à une position autre que ladite position à laquelle la valeur absolue de la valeur différenciée dépasse la valeur prédéterminée (To) et autre qu'une position au voisinage de ladite position parmi celles auxquelles les valeurs de signaux d'image numériques sont égales à ladite valeur de caractéristique (Th) sur ladite ligne est déterminée comme ledit point de contour latent, ladite détection desdits points de contour de champ d'exposition est effectuée pour des lignes respectives dans un intervalle prédéterminé sur ladite image, et la partie de l'image enfermée par une ligne de contour ou des lignes passant par lesdits points de contour de champ d'exposition sur les lignes respectives est déterminée comme un champ d'exposition.

8. Procédé tel que défini dans la revendication 1, dans lequel les positions respectives formant une ligne dans une direction prédéterminée sur ladite image sont déterminées comme une ligne, lesdites valeurs de signaux d'image numériques sur ladite ligne sont soumises à un traitement de différenciation, au moins une position à laquelle la valeur absolue de la valeur différenciée dépasse une valeur prédéterminée (To) est sélectionnée comme un point de contour de champ d'exposition prospectif sur ladite ligne, la valeur de signal d'image numérique audit point de contour de champ d'exposition prospectif sur ladite ligne est détectée, une valeur de caractéristique (Th) dudit signal d'image numérique est déterminée à partir de ladite valeur de signal d'image numérique, des positions auxquelles les valeurs de signaux d'image numériques sont égales à ladite valeur de caractéristique (Th) sur ladite ligne sont déterminées comme les points de contour de champ d'exposition sur ladite ligne, ladite détermination desdits points de contour de champ d'exposition est effectuée pour des lignes respectives dans un intervalle prédéterminé sur ladite image, et les parties de l'image enfermée par une ligne ou des lignes de contour passant par lesdits points de contour de champ d'exposition sur les lignes respectives sont déterminées comme un champ d'exposition.

9. Procédé tel que défini dans l'une des revendications 6, 7 ou 8, dans lequel les axes x et y normaux l'un à l'autre sont déterminés sur ladite image ou ladite partie d'image, et ladite détermination desdits points de contour de champ d'exposition sur ladite ligne est effectuée pour les lignes dans la direction d'axe x et pour les lignes dans la direction d'axe y.

EP 0 328 165 B1

# F I G . I

x

2b

y

2

1

2a

2a

2b

# F I G . 2A

x

1

y

| f(1,1) | f(2,1) | f(3,1) | f(4,1) | f(5,1) | f(6,1) |
| f(1,2) | f(2,2) | f(3,2) | f(4,2) | f(5,2) | f(6,2) |
| f(1,3) | f(2,3) | f(3,3) | f(4,3) | f(5,3) | f(6,3) |
| f(1,4) | f(2,4) | f(3,4) | f(4,4) | f(5,4) | f(6,4) |
| f(1,5) | f(2,5) | f(3,5) | f(4,5) | f(5,5) | |
| f(1,6) | f(2,6) | f(3,6) | f(4,6) | f(5,6) | |

# F I G . 2B

1

| F(1,2) | F(2,2) | F(3,2) | F(4,2) | F(5,2) | F(6,2) |
| F(1,5) | F(2,5) | F(3,5) | F(4,5) | F(5,5) | |

# F I G . 2C

1

| Δ(1,2) | Δ(2,2) | Δ(3,2) | Δ(4,2) | Δ(5,2) |
| Δ(1,5) | Δ(2,5) | Δ(3,5) | Δ(4,5) | |

# F I G.3A

# F I G.3B

# F I G.4A

# F I G.4B

# F I G.5A

ORIGINAL IMAGE

# F I G.5B

MEDIAN FILTER
PROCESSED IMAGE

# F I G.6A

# F I G.6B

# FIG.7 FIG.8A FIG.8B FIG.8C FIG.8D

# FIG.9A  FIG.9B  FIG.9C

# FIG.9D  FIG.9E

# FIG.IOA

# FIG.IOB

# FIG.IOC

# FIG.IOD

# FIG.IOE

# FIG.IOD

# FIG.IOG

EP 0 328 165 B1

FIG.II FIG.I2A FIG.I2B FIG.I2C

FIG.I2D

FIG.I3A FIG.I3B FIG.I3C

FIG.I3D FIG.I3E

30

# FIG.14A

# FIG.14B

# FIG.14C

# FIG.14D

# FIG.14E

# FIG.14F

# FIG.14G

# FIG.14H

# FIG.14I

# F I G .15

# F I G .16A

# F I G .16B

# F I G .16C

FIG.17A   FIG.17B   FIG.17C   FIG.17D

FIG.17E   FIG.17F   FIG.17G

FIG.18   FIG.19

# F I G . 20

# F I G . 22

POSITION IN
X AXIS DIRECTION

# F I G . 23

POSITION IN X
AXIS DIRECTION

34

## FIG.2IA

| | | | | | |
|---|---|---|---|---|---|
| $f_{(1,1)}$ | $f_{(2,1)}$ | $f_{(3,1)}$ | $f_{(4,1)}$ | $f_{(5,1)}$ | $f_{(6,1)}$ |
| $f_{(1,2)}$ | $f_{(2,2)}$ | $f_{(3,2)}$ | $f_{(4,2)}$ | $f_{(5,2)}$ | $f_{(6,2)}$ |
| $f_{(1,3)}$ | $f_{(2,3)}$ | $f_{(3,3)}$ | $f_{(4,3)}$ | $f_{(5,3)}$ | $f_{(6,3)}$ |
| $f_{(1,4)}$ | $f_{(2,4)}$ | $f_{(3,4)}$ | $f_{(4,4)}$ | $f_{(5,4)}$ | $f_{(6,4)}$ |
| $f_{(1,5)}$ | $f_{(2,5)}$ | $f_{(3,5)}$ | $f_{(4,5)}$ | $f_{(5,5)}$ | |
| $f_{(1,6)}$ | $f_{(2,6)}$ | $f_{(3,6)}$ | $f_{(4,6)}$ | $f_{(5,6)}$ | |

## FIG.2IB

| | | | | | |
|---|---|---|---|---|---|
| $F_{(1,2)}{}^i$ | $F_{(2,2)}{}^i$ | $F_{(3,2)}{}^i$ | $F_{(4,2)}{}^i$ | $F_{(5,2)}{}^i$ | $F_{(6,2)}{}^i$ |
| $F_{(1,5)}{}^i$ | $F_{(2,5)}{}^i$ | $F_{(3,5)}{}^i$ | $F_{(4,5)}{}^i$ | $F_{(5,5)}{}^i$ | |

## FIG.2IC

| | | | | |
|---|---|---|---|---|
| $\delta_{(1,2)}{}^i$ | $\delta_{(2,2)}{}^i$ | $\delta_{(3,2)}{}^i$ | $\delta_{(4,2)}{}^i$ | $\delta_{(5,2)}{}^i$ |
| $\delta_{(1,5)}{}^i$ | $\delta_{(2,5)}{}^i$ | $\delta_{(3,5)}{}^i$ | $\delta_{(4,5)}{}^i$ | |

## FIG.24

## FIG.25A

## FIG.25B

EP 0 328 165 B1

# F I G . 26

# F I G . 27

POSITION IN X
AXIS DIRECTION

# F I G . 28

POSITION IN
X AXIS
DIRECTION